(19)

**Europäisches Patentamt**
**European Patent Office**
**Office européen des brevets**

(11) **EP 4 402 774 B1**

(12) **EUROPEAN PATENT SPECIFICATION**

(45) Date of publication and mention
of the grant of the patent:
**05.11.2025 Bulletin 2025/45**

(21) Application number: **22786693.6**

(22) Date of filing: **13.09.2022**

(51) International Patent Classification (IPC):
*H02J 50/60* (2016.01)   *H02J 50/12* (2016.01)
*H02J 50/90* (2016.01)   *B60L 53/124* (2019.01)
*G01V 3/10* (2006.01)    *G01V 3/17* (2006.01)
*G01V 3/08* (2006.01)    *B60L 53/38* (2019.01)
*H02J 7/02* (2016.01)

(52) Cooperative Patent Classification (CPC):
**H02J 50/12; B60L 53/124; B60L 53/38;**
**G01V 3/088; G01V 3/10; H02J 50/60; H02J 50/90;**
H02J 7/02; H02J 2310/48; Y02T 10/70;
Y02T 10/7072; Y02T 90/14

(86) International application number:
**PCT/US2022/076345**

(87) International publication number:
**WO 2023/044300 (23.03.2023 Gazette 2023/12)**

(54) **CIRCUIT FOR OBJECT DETECTION AND VEHICLE POSITION DETERMINATION**

SCHALTUNG ZUR OBJEKTERKENNUNG UND ZUR FAHRZEUGPOSITIONSBESTIMMUNG

CIRCUIT DE DÉTECTION D'OBJET ET DÉTERMINATION DE POSITION DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.09.2021 US 202163244165 P**
**12.09.2022 US 202217931429**

(43) Date of publication of application:
**24.07.2024 Bulletin 2024/30**

(73) Proprietor: **WiTricity Corporation**
**Midway, Georgia 31320 (US)**

(72) Inventors:
• **WIDMER, Hans Peter**
**Watertown, MA 02472 (US)**
• **CASTRO FONSECA, José Pedro**
**Watertown, MA 02472 (US)**
• **DAETWYLER, Andreas**
**Watertown, MA 02472 (US)**
• **SIEBER, Lukas Frank**
**Watertown, MA 02472 (US)**

(74) Representative: **Tomkins & Co**
**5 Dartmouth Road**
**Dublin 6, D06 F9C7 (IE)**

(56) References cited:
**WO-A1-2021/081382     US-A1- 2021 124 078**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present disclosure relates generally to object detection and vehicle position determination, for example, in an application for inductive wireless charging of electric vehicles. In particular, the present disclosure is directed to a multi-purpose detection circuit configurable for detecting foreign metallic objects, living objects located near an inductive wireless power transmitter as well as for detecting a vehicle above the wireless power transmitter and for determining a position of the vehicle relative to the inductive wireless power transmitter.

BACKGROUND

Inductive wireless power transfer (WPT) systems provide one example of wireless transfer of energy. In an inductive WPT system, a primary power device (or wireless power transmitter) transmits power wirelessly to a secondary power device (or wireless power receiver). Each of the wireless power transmitter and wireless power receiver includes an inductive power transfer structure, typically a single or multi-coil arrangement of windings comprising electric current conveying materials (e.g., copper Litz wire). An alternating current passing through the coil e.g., of a primary wireless power transfer structure produces an alternating magnetic field. When a secondary wireless power transfer structure is placed in proximity to the primary wireless power transfer structure, the alternating magnetic field induces an electromotive force (EMF) into the secondary wireless power transfer structure according to Faraday's law, thereby wirelessly transferring power to the wireless power receiver if a resistive load is connected to the wireless power receiver. To improve a power transfer efficiency, some implementations use a wireless power transfer structure that is part of a resonant structure (resonator). The resonant structure may comprise a capacitively loaded inductor forming a resonance substantially at a fundamental operating frequency of the inductive WPT system (e.g., in the range from 80 kHz to 90 kHz).

Inductive wireless power transfer to electrically chargeable vehicles at power levels of several kilowatts in both domestic and public parking zones may require special protective measures for safety of persons and equipment. Such measures may include detection of foreign objects in an inductive power region of the inductive WPT system where electromagnetic field exposure levels exceed certain limits. This may be particularly true for systems where the inductive power region is open and accessible. Such measures may include detection of electrically conducting (metallic) objects and living objects, (e.g., humans, extremities of humans, or animals) that may be present within or near the inductive power region.

In certain applications for inductive wireless charging of electric vehicles, it may be useful to be able to detect foreign objects that may be present in the inductive power region and that could be susceptible to induction heating due to the high magnetic field strength in that region. In an inductive wireless power transfer system for electric vehicle charging operating at a fundamental frequency in the range from 80 kHz to 90 kHz, magnetic flux densities in the inductive power region (e.g., above a primary wireless power transfer structure) can reach relatively high levels (e.g., above 2 mT) to allow for sufficient power transfer (e.g., 3.3 kW, 7 kW, 11 kW, and the like). Therefore, metallic objects or other objects present in the magnetic field can experience undesirable induction heating. For this reason, foreign object detection (FOD) may be implemented to detect metallic objects or other objects that are affected by the magnetic field generated by the primary and/or the secondary wireless power transfer structure of the inductive WPT system.

In certain applications for inductive wireless charging of electric vehicles, it may also be useful to be able to detect living objects that may be present within or near an inductive power region where the level of electromagnetic field exposure exceeds certain limits (e.g., as defined by the International Commission on Non-Ionizing Radiation Protection (ICNIRP) recommendation). For this reason, living object detection (LOD) may be implemented to detect living objects (e.g., human extremities, animals), or other objects that may be exposed to the magnetic field generated by the primary and/or the secondary wireless power transfer structure of the inductive WPT system.

In further applications for inductive wireless charging of electric vehicles, it may also be useful to be able to detect a vehicle or the type of vehicle that may be present above the wireless power transmitter (e.g., above the primary wireless power transfer structure). For this reason, vehicle detection (VD) may be implemented. In yet another application for inductive wireless charging of electric vehicles, it may also be useful to be able to transmit data (e.g., a vehicle identifier or the like) from the vehicle-based secondary device to the ground-based primary device. For this reason, vehicle detection (VD) may be extended for receiving low rate signaling from the vehicle.

Efficiency of an inductive WPT system for electric vehicle charging depends at least in part on achieving sufficient alignment between the ground-based primary wireless power transfer structure and the secondary wireless power transfer structure. Therefore, in certain applications for inductive wireless charging of electric vehicles, it may be useful to be able to determine a position of the vehicle relative to the wireless power transmitter for purposes of guidance and alignment. More specifically, it may be useful to be able to determine a position of the vehicle-based wireless power transfer structure (e.g., the secondary wireless power transfer structure) relative to the ground-based wireless power transfer structure (e.g., the primary wireless power transfer structure). For this reason, position determination (PD) may be implemented.

In an aspect of hardware complexity reduction and cost saving, it may be useful and desirable to provide FOD, LOD, VD, and PD by a common multi-purpose detection circuit. Reference is made to US2021124078A1 entitled Circuit for Object Detection and Vehicle Position Determination in which a multi-purpose detection circuit for object detection and vehicle position determination is described.

SUMMARY

The invention is defined by the appended claims. In the following, apparatus and/or methods referred to as embodiments that nevertheless do not fall within the scope of the claims should be understood as examples useful for understanding the invention. In one aspect of the disclosure, an apparatus for determining at least one of a presence of a metallic object, living object, vehicle, type of vehicle, and a vehicle position is provided. The apparatus includes a plurality of inductive sense circuits and a plurality of capacitive sense circuits. Each of the plurality of inductive sense circuits includes at least one inductive sense element (e.g., a sense coil) and an associated capacitive element to compensate for the gross reactance as presented at the terminals of the at least one inductive sense element at an operating frequency herein referred to as the sense frequency. Each of the plurality of capacitive sense circuits includes at least one capacitive sense element (e.g., a sense electrode) and an associated inductive element to compensate for the gross reactance as presented at the terminals of the at least one capacitive sense element at the sense frequency. At least one of the plurality of inductive and capacitive sense circuits also includes an impedance matching element (e.g., a transformer) for transforming the impedance of the sense circuit to match with an operating impedance range of the apparatus. The apparatus further includes a measurement circuit for selectively and sequentially measuring an electrical characteristic (e.g., an impedance) in each of the plurality of inductive and capacitive sense circuits according to a predetermined time multiplexing scheme. More specifically, the measurement circuit includes a driver circuit including multiplexing (input multiplexing) electrically connected to the plurality of inductive and capacitive sense circuits for selectively and sequentially driving each of the plurality of sense circuits with a drive signal (e.g., a current signal) at the sense frequency based on a driver input signal. The measurement circuit further includes a measurement amplifier circuit including multiplexing (output multiplexing) electrically connected to the plurality of inductive and capacitive sense circuits for selectively and sequentially amplifying a measurement signal (e.g., a voltage signal) in each of the plurality of sense circuits and for providing a measurement amplifier output signal indicative of the measurement signal in each of the plurality of sense circuits. The measurement circuit also includes a signal generator circuit electrically connected to the input of the driver circuit for generating the driver input signal. The measurement circuit further includes a signal processing circuit electrically connected to the output of the measurement amplifier circuit for receiving and processing the measurement amplifier output signal and for determining the electrical characteristic in each of the plurality of inductive and capacitive sense circuits based on the driver input signal and the measurement amplifier output signal. The apparatus further includes a control and evaluation circuit electrically connected to the measurement circuit for controlling the signal generator circuit, for controlling the input and output multiplexing according to the predetermined time multiplexing scheme, for evaluating the electrical characteristic as measured in each of the inductive and capacitive sense circuits, and for determining at least one of a presence of a metallic object, living object, vehicle, type of vehicle, and a vehicle position based on changes in the measured electrical characteristics.

In another aspect of the disclosure, a method for determining at least one of a presence of a metallic object, living object, vehicle, type of vehicle, and a vehicle position is provided. The method includes selectively and sequentially measuring, in a measurement circuit, an electrical characteristic (e.g., an impedance) in each of the plurality of inductive and capacitive sense circuits according to a predetermined time multiplexing scheme. More specifically, the method includes selectively and sequentially applying, from a driver circuit as part of the measurement circuit and including input multiplexing, a drive signal (e.g., a current signal) at a sense frequency to each of the plurality of inductive and capacitive sense circuits according to the predetermined time multiplexing scheme. The method further includes selectively and sequentially amplifying, in a measurement amplifier circuit as part of the measurement circuit, and including output multiplexing, a measurement signal (e.g., a voltage signal) in each of the plurality of inductive and capacitive sense circuits according to the predetermined time multiplexing scheme, and providing a measurement amplifier output signal indicative for the measurement signal. The method further includes applying, from a signal generator circuit as part of the measurement circuit, a driver input signal to the driver circuit. The method further includes receiving and processing, in a signal processing circuit as part of the measurement circuit, the measurement amplifier output signal, and determining the electrical characteristic in each of the plurality of inductive and capacitive sense circuits based on the driver input signal and the measurement amplifier output signal. The method further includes controlling, in a control and evaluation circuit, the signal generator circuit and the input and output multiplexing according to the time multiplexing scheme. The method further includes evaluating the electrical characteristic as measured in each of the inductive and capacitive sense circuits and determining at least one of a presence of a metallic object, living object, vehicle, type of vehicle, and a vehicle position based on changes in the measured electrical characteristics.

BRIEF DESCRIPTION OF THE DRAWINGS

In the figures, the third and fourth digit of a reference number, counting from the right, identify the figure in which the reference number first appears. The use of the same reference numbers in different instances in the description or the figures indicates like elements.

FIG. 1 is a schematic view illustrating an example implementation of a multi-purpose detection circuit including a plurality of inductive and capacitive sense circuits, a non-living (e.g., metallic) object, and a living object.

FIG. 2 is a schematic view illustrating an example implementation of a wireless power transfer structure of a wireless power transmitter integrating a portion of the multi-purpose detection circuit shown in FIG. 2, the non-living and the living object of FIG. 1.

FIG. 3 is a vertical cut view illustrating a portion of a WPT system including the vehicle-based wireless power transfer structure and the ground-based wireless power transfer structure integrating a portion of the multi-purpose detection circuit of FIG. 1, and the non-living and the living object of FIG. 1.

FIG. 4 is a generic block diagram of an example implementation of the multi-purpose detection circuit o FIG. 1.

FIG. 5 is a schematic diagram of a circuit illustrating an example implementation of a portion of the multi-purpose detection circuit of FIG. 1 based on inductive sensing and an impedance measurement approach, and the non-living and the living object of FIG. 1.

FIG. 6 is a schematic diagram of a circuit illustrating an example implementation of a portion of the multi-purpose detection circuit of FIG. 1 based on capacitive sensing and the impedance measurement approach of FIG. 5, and the living and the non-living object of FIG. 1.

FIG. 7A is a schematic diagram of a circuit illustrating an example implementation of a portion of the multi-purpose detection circuit of FIG. 1 including a plurality of inductive and capacitive sense circuits.

FIG. 7B is a schematic diagram illustrating an example implementation of a portion of the circuit of FIG. 7A.

FIG. 7C is a schematic diagram illustrating an example implementation of another portion of the circuit of FIG. 7A.

FIG. 7D is a schematic diagram illustrating an example implementation of a further portion of the circuit of FIG. 7A.

FIG. 7E is a schematic diagram illustrating an example implementation of yet another portion of the circuit of FIG. 7A.

FIG. 7F is a schematic diagram illustrating an example implementation of yet a further portion of the circuit of FIG. 7A.

DETAILED DESCRIPTION

The detailed description set forth below in connection with the appended drawings is intended as a description of example implementations and is not intended to represent the only implementations in which the techniques described herein may be practiced. The term "example" used throughout this description means "serving as an example, instance, or illustration," and should not necessarily be construed as preferred or advantageous over other example implementations. The detailed description includes specific details for the purpose of providing a thorough understanding of the example implementations. In some instances, some devices are shown in block diagram form. Drawing elements that are common among the following figures may be identified using the same reference numerals.

As mentioned above foreign object detection (FOD) (and particularly metal object detection) may be valuable for a variety of applications. For detection in a predetermined region, a FOD system may include a plurality of inductive sense circuits each including an inductive sense element (e.g., a sense coil) distributed across a predetermined area (e.g., a planar array of sense coils integrated into the ground-based wireless power transfer structure). The predetermined region may be defined by the space where metal objects may be found and where the magnetic flux density exceeds certain limits (e.g., a threshold determined based on what levels of temperature a metal object might be heated up). This is generally a three-dimensional space above the plurality of indictive sense elements. The number of the inductive sense elements may be proportional or related to the minimum size of objects that are desirable to be detected. For a system that is configured to detect small objects (e.g., a paper clip), the number of sense elements may be relatively high (e.g., in the order of 100). An example FOD system is described in U.S. Patent No. 10,627,257, titled *Systems, Methods, and Apparatus for Detection of Metal Objects in a Predetermined* Space.

As mentioned above living object detection (LOD) (e.g., human extremities, animals) may be valuable for a variety of applications. For detection in a predetermined region, a LOD system may include a plurality of capacitive sense circuits each including a capacitive sense element (e.g., a sense electrode) e.g., disposed along the periphery of a ground-based wireless power transfer structure of a WPT system. The predetermined region may be defined by the space accessible for living objects and where living objects may be located and where the exposure magnetic field strength exceeds certain limits (e.g., as recommended by ICNIRP). This is generally a three-dimensional space. The number of the capacitive sense elements may be proportional or related to the minimum size of living objects that are desirable to be detected. For a system that is configured to detect human extremities (e., a hand) and animals (e.g., a cat), the number of sense elements may be relatively low (e.g., in the order of 4). A measurement drive circuitry for applying drive signals to each of the plurality of capacitive sense circuits each including a capacitive sense element and additional elements for conditioning, as well as corresponding measurement circuitry as needed for measuring an electrical characteristic in each of the plurality of capacitive sense circuits and for looking for changes in the electrical characteristics that may correspond to the presence of a living object. An example LOD system is described in U.S. Patent No. 9,952,266, titled *Object Detection for Wireless Energy Transfer Systems,* the entire contents of which are hereby incorporated by reference.

As mentioned above vehicle detection (VD) or detection of the type of vehicle above the ground-based wireless power transfer structure of a WPT system may be valuable for a variety of applications. For detection of a vehicle or the type of vehicle, a VD system may include a plurality of inductive sense circuits each including an inductive sense element (e.g., a sense coil) distributed across an area defined by the ground-based wireless power transfer structure (e.g., a planar array of sense coils) and a plurality of capacitive sense circuits each including a capacitive sense element (e.g., a sense electrode) disposed in an area defined by the ground-based wireless power transfer structure. Drive circuitry for applying drive signals to each of the inductive and capacitive sense circuits, each including an inductive and capacitive sense element, respectively and additional elements for conditioning, as well as corresponding measurement circuitry as needed for measuring an electrical characteristic in each of the plurality of capacitive sense circuits and for looking for changes in the electrical characteristics that may correspond to the presence of a vehicle.

As mentioned above determination of a position (PD) of a vehicle (e.g., the position of the vehicle-based wireless power transfer structure relative to the ground-based wireless power transfer structure of a WPT system) may be valuable for a variety of applications. For determination of a vehicle position, a PD system may include a plurality of inductive sense circuits each including an inductive sense element (e.g., a sense coil) distributed across an area defined by the ground-based wireless power transfer structure (e.g., a planar array of sense coils) and a plurality of capacitive sense circuits each including a capacitive sense element (e.g., a sense electrode) disposed in an area defined by the ground-based wireless power transfer structure.

In some implementations, the PD system is configured to support a passive beacon PD technique. Passive beacon PD uses at least one passive beacon transponder that may be integrated into the vehicle-based wireless power transfer structure or that may be mounted elsewhere at the vehicle underbody. When positioned above the inductive and capacitive sense element array of the multi-purpose detection circuit, the passive beacon transponder produces a distinct time-varying change (a modulated response) in the electrical characteristic of at least one of the plurality of inductive sense circuits and capacitive sense circuits. This modulated response may be used for determining a position of the at least one passive beacon transponder relative to the array of sense elements, which is related to the position of the vehicle-based wireless power transfer structure relative to the ground-based wireless power transfer structure. The at least one passive beacon transponder may also be used for determining presence of a vehicle (VD) or the type of vehicle e.g., by means of a modulation that is characteristic for the type of vehicle. Further, the at least one passive beacon transponder may be used to transmit data (e.g., at a low data rate) to the primary device by means of the passive modulation technique.

In some implementations, the at least one passive beacon transponder includes an inductive passive beacon transponder configured to mainly interact with the inductive sense circuits. In other implementations, the at least one passive beacon transponder includes a capacitive passive beacon transponder configured to mainly interact with the capacitive sense circuits. In further implementations, the at least one passive beacon transponder is configured to interact with both the inductive and capacitive sense circuits. An example inductive passive beacon PD system is described in U.S. Patent application 16/052,445, titled *Hybrid Foreign Object Detection and Positioning* System.

Circuitry for applying drive signals to each of the plurality of inductive and/or capacitive sense circuits each including a sense element and additional elements for conditioning, as well as corresponding measurement, control and evaluation circuitry as needed for measuring an electrical characteristic in each of the plurality of inductive sense circuits and detecting changes in the electrical characteristics that may be indicative of one of the presence of a metal object, a living object, a vehicle, the type of vehicle, and a vehicle position may be complex and costly as the number of sense elements increases. Therefore, in an aspect of hardware complexity reduction and cost saving, it may be useful and desirable to combine the various functions such as FOD, LOD, VD, data signaling, and PD in a single system referred to herein as the multi-purpose detection circuit.

An electric vehicle is used herein to describe a remote system, an example of which is a vehicle that includes, as part of its locomotion capabilities, electrical power derived from a chargeable energy storage device (e.g., one or more rechargeable electrochemical cells or other type of battery). As non-limiting examples, some electric vehicles may be hybrid electric vehicles that include, besides electric motors, a traditional combustion engine for direct locomotion or to charge the vehicle's battery. Other electric vehicles may draw all locomotion ability from electrical power. An electric vehicle is not limited to an automobile and may include motorcycles, carts, scooters, and the like.

A foreign object is used herein to describe an object that does not naturally belong to the WPT system. A foreign object may include a metallic object, a non-living dielectric (substantially nonconductive) object, a living object (e.g., an animal, a human extremity), a vehicle, or a combination thereof. It may describe an object that needs to be detected for purposes of safety of equipment or persons, but it may also refer to an object of no harm that is potential to produce a false positive detection in a multi-purpose detection system.

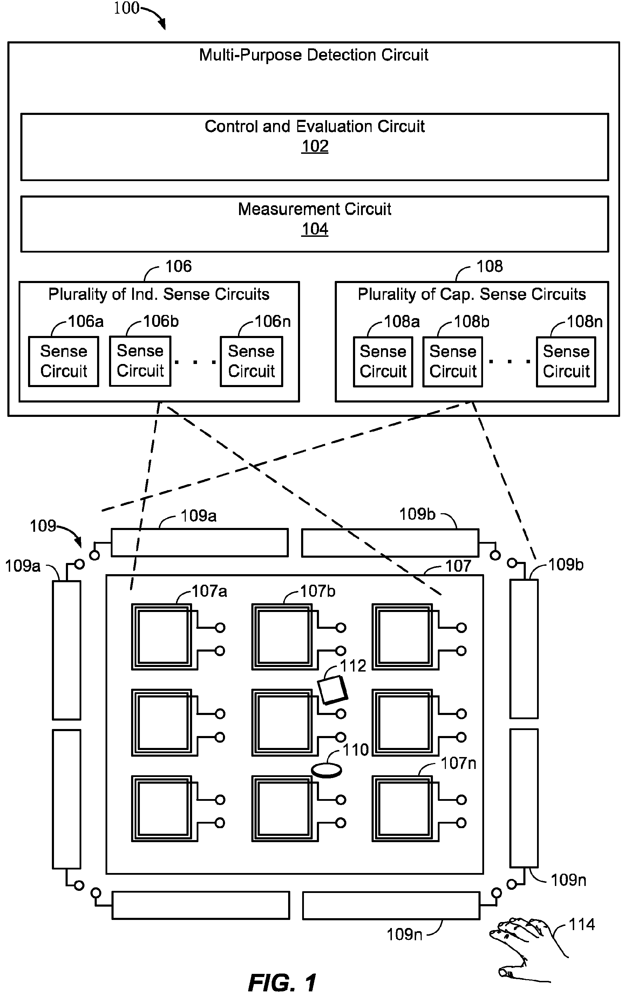

FIG. 1 illustrates an example implementation of a multi-purpose detection circuit 100 that includes a plurality of inductive sense circuits 106 and a plurality of capacitive sense circuits 108 illustrated in FIG. 1 by inductive sense circuits 106a, 106b, some dots, and 106n and by capacitive sense circuits 108a, 108b, some dots, and 108n. The dots shall indicate that the number of inductive sense circuits 106 and/or the number of capacitive sense circuits 108 may be greater than three. The plurality of inductive sense circuits 106 is also sometimes referred herein as the plurality of inductive sense circuits 106a, 106b, ..., 106n. Likewise, the plurality of capacitive sense circuits 108 is also sometimes referred herein as the plurality of capacitive sense circuits 108a, 108b, ..., 108n. As illustrated in FIG. 1, each of the inductive sense circuit of the plurality of sense circuits 106a, 106b, ..., 106n includes a corresponding inductive sense element (e.g., a sense coil) of a plurality of inductive sense elements 107a, 107b, ..., 107n, respectively. Likewise, each of the capacitive sense circuits of the plurality of sense circuits 108a, 108b, ..., 108n includes a corresponding capacitive sense element (e.g., a pair of sense electrodes) of a plurality of capacitive sense elements 109a, 109b, ..., 109n, respectively.

FIG. 1 also illustrates foreign objects 110 and 112 as referred to herein as non-living objects and a living object 114. The object 110 may represent a metallic (substantially electrically conductive object) that is potentially heated when exposed to the WPT magnetic field as previously discussed, while the object 112 may be representative for a dielectric or ferromagnetic object that is substantially electrically non-conductive and that does not heat to hazardous temperatures when exposed to the WPT magnetic field. The living object 114 may stand for a human extremity (e.g., a hand as depicted in FIG. 1) or an animal that is dielectric and substantially electrically non-conductive.

The inductive sense elements 107a, 107b, ..., 107n and capacitive sense elements 109a, 109b, ..., 109n are configured to sense at least one of a presence of a foreign object (e.g., object 110) in proximity to at least one of the plurality of inductive sense elements 107a, 107b, ..., 107n, a living object (e.g., object 114) in proximity to at least one of the plurality of capacitive sense elements 109a, 109b, ..., 10n, a vehicle or type of vehicle (not shown in FIG. 1) positioned above the plurality of inductive and capacitive sense elements 107a-107n and 109a-109n, respectively, and for determining a vehicle position based on measuring one or more electrical characteristics (e.g., an impedance) in each of the plurality of inductive sense circuits 106a, 106b, ..., 106n and capacitive sense circuits 108a, 108b, ..., 108n and based on detecting changes in the measured one or more electrical characteristics. Each of the plurality of inductive sense circuits 106a, 106b, ..., 106n and capacitive sense circuits 108a, 108b, ..., 108n may also include additional conditioning circuitry (not shown in FIG. 1) e.g., configured to improve measurement of the one or more electrical characteristics and thus sensitivity and reliability of the multi-purpose detection circuit 100. Each of the plurality of sense circuits also defines at least one measurement port (not shown in FIG. 1) where the one or more electrical characteristics is measured and refers to.

Each of the plurality of inductive sense elements 107a, 107b, ..., 107n is shown in FIG. 1 as a "circular" coil for purposes of illustration. However, in other implementations, the inductive sense elements 107a, 107b, ..., 107n may include a sense coil having another coil topology, e.g., a "figure-eight-like" topology. In yet other implementations, the plurality of inductive sense elements 107a, 107b, ..., 107n, may include sense coils of a mixed coil topology, e.g., "circular" and "figure-eight-like". In further implementations, the plurality of inductive sense elements 107a, 107b, ..., 107n, may include sense coils (e.g., solenoid coils) with a ferrite core (not shown herein) that are physically smaller compared to "air" coils. In yet further implementations, the plurality of sense elements 107a, 107b, ..., 107n may include other inductive devices that can be used for generating a magnetic field for detecting a foreign object (e.g., object 110), a vehicle, or for determining a vehicle position. In some implementations (not shown herein), each of the plurality of inductive sense elements 107a, 107b, ..., 107n, may include a double or even a triple sense coil arrangement that may be used in conjunction with a transimpedance or mutual impedance measurement technique. In some implementations, the plurality of inductive sense elements 107a, 107b, ..., 107n is arranged in an array 107, such as a two-dimensional array 107 as shown in FIG. 1. However, in other implementations, the sense elements of the plurality of inductive sense elements 107a, 107b, ..., 107n are arranged in other configurations that do not conform to rows or columns (radial or interleaved), are at least partially overlapping or have irregular spacing, have different size, have different shapes (circular, hexagonal, etc.), or cover irregular detection areas, or any combination thereof. As such the term "array" as used herein denotes a plurality of sense elements that are arranged over a predetermined area. Furthermore, the number of sense elements of an array 107 and thus the number of sense circuits can vary widely based on the application including the total region in which a foreign object (e.g., object 110) is to be detected and the smallest size of an object the multi-purpose detection circuit 100 is configured to detect. Example implementations of the inductive sense element (e.g., 107a) and arrangements of inductive sense elements are described in U.S. Patent No. 9,726,518, titled *Systems, Methods, and Apparatus for Detection of Metal Objects in a Predetermined Space,* in U.S. Patent application 16/358,534, titled *Foreign Object Detection Circuit Using Mutual Impedance Sensing,* in U.S. Patent No. 10,122,192, titled *Sense Coil Geometries with Improved Sensitivity for Metallic Object Detection in a Predetermined Space,* in U.S. patent No. 10,124,687, titled *Hybrid Foreign Object Detection (FOD) Loop Array* Board.

Each of the plurality of capacitive sense elements 109a, 109b, ..., 109n is shown in FIG. 1 as a pair of sense electrodes for purposes of illustration. However, in other implementations, the capacitive sense elements 109a, 109b, ..., 10n may include a single electrode providing a single terminal. In further implementations, the capacitive sense elements 109a, 109b, ..., 109n, may be driven and configured for measuring a transimpedance (a mutual capacitance). In yet further implementations, the capacitive sense elements 109a, 109b, ..., 109n, may include other capacitive devices that can be used for generating and detecting an electric field for detecting a foreign object (e.g., object 112), a living object (e.g., object 114), a vehicle (e.g., vehicle 330), or for determining a type of vehicle or a vehicle position. In FIG. 1, the capacitive sense elements 109a, 109b, ..., 109n, are shown arranged in an area around the array of inductive sense elements 107a, 107b, ..., 107n. However, in other implementations, the capacitive sense elements of the plurality of capacitive sense elements 109a, 109b, ..., 109n are arranged in other configurations, e.g., distributed over the area of the array 107 of the inductive sense elements. Example implementations of the capacitive sense element (e.g., 109a) and arrangements of capacitive sense elements are described in U.S. Patent No. 9,952,266, titled *Object Detection for Wireless Energy Transfer* Systems.

Each of the plurality of inductive sense circuits 106 and the plurality of capacitive sense circuits 108 including a corresponding sense element of the plurality of inductive sense elements 107a-107n and the plurality of capacitive sense elements 109a-109n are operably connected to a measurement circuit 104. The measurement circuit 104, including multiplexing (not shown in FIG. 1), is configured to selectively and sequentially measure one or more electrical characteristics in each of the plurality of inductive and capacitive sense circuits (106 and 108, respectively) and to provide outputs to the control and evaluation circuit 102.

The measurement circuit 104 is configured to cause each of the plurality of inductive sense elements (e.g., sense coils) 107a, 107b, ..., 107n to selectively and sequentially generate an alternating magnetic field at the sense frequency, e.g., by selectively and sequentially applying a sense signal (e.g., a current) to each of the plurality of inductive sense circuits 106a, 106b, ..., 106n. If a metallic object (e.g., object 110) is present in the alternating magnetic field, eddy currents will be generated in the object. According to Lentz' law, the eddy currents in the object will generate another (secondary) magnetic field that interacts with the primary magnetic field as generated by the respective sense element, and a mutual coupling is developed. This may cause a change in an electrical characteristic (e.g., an impedance) as measured by the measurement circuit 104 in the respective inductive sense circuit (e.g., inductive sense circuit 106a). A change in a measured electrical characteristic may also be caused by a substantially non-conductive but ferromagnetic object (not shown in FIG. 1) with a relative permeability $\mu_r > 1$ that interacts with the alternating magnetic field as generated by the respective sense element. Applying a sense signal to an inductive sense circuit (e.g., sense circuit 106a) may also cause the respective inductive sense element to generate an alternating electric field that may interact with a substantially non-conductive, dielectric object (e.g., non-living object 112 or living object 114) causing a change in the electrical characteristic as measured in the respective inductive sense circuit (capacitive sensing effect). This alternating electric field may also interact with a metallic (substantially electrically conductive) object (e.g., object 110). However, this effect may be orders of magnitude weaker than the magnetic field effect.

The measurement circuit 104 is further configured to cause each of the plurality of capacitive sense elements (e.g., sense electrodes) 109a, 109b, ..., 109n to selectively and sequentially generate an alternating electric field at the sense frequency, e.g., by selectively and sequentially applying a sense signal (e.g., a current) to each of the plurality of capacitive sense circuits 108a, 108b, ..., 108n. If a substantially non-conductive, dielectric object (e.g., living object 114 or non-living object 112) with a relative permittivity $\varepsilon_r > 1$ is present in the alternating electric field, it will interact with the electric field. This may cause a change in an electrical characteristic (e.g., an impedance) as measured by the measurement circuit 104 in the respective capacitive sense circuit (e.g., capacitive sense circuit 108a). A change in a measured electrical characteristic may also be caused by a metallic object (e.g., object 110) as it will also interact with the alternating electric field as generated by the respective capacitive sense element. Applying a sense signal (e.g., current) to a capacitive sense circuit (e.g., sense circuit 106a) may also cause the respective capacitive sense element to generate an alternating magnetic field that may interact with a metallic object (e.g., object 110) causing a change in the electrical characteristic as measured in the respective capacitive sense circuit (inductive sensing effect). However, this effect may be orders of magnitude weaker than the electric field effect.

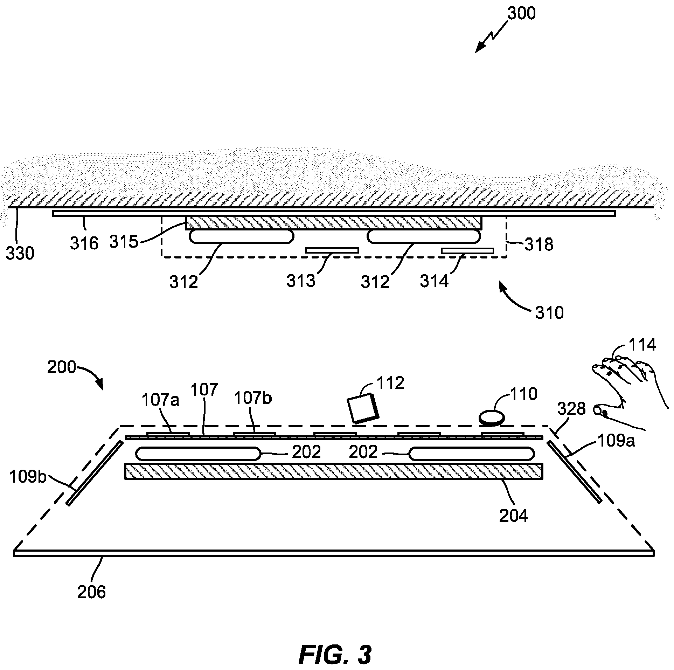

The control and evaluation circuit 102 is configured to control the measurement circuit 104 (e.g., the multiplexing) and to evaluate the outputs of the measurement circuit 104, to determine at least one of a presence of a foreign object (e.g., object 110), living object (e.g., object 114), a presence of a vehicle with reference to FIG. 3, a type of vehicle, and a vehicle position based on changes in the measured one or more electrical characteristics. In some implementations, the control and evaluation circuit 102 may include the decision functions as needed for FOD, LOD, and VD as well as the position calculation functions needed for PD. In other implementations, the vehicle position is determined in a unit external to the multi-purpose detection circuit 100 (not shown herein) based on outputs (e.g., raw data) from the control and evaluation circuit 102 and on outputs provided by other ground- or vehicle-based sensors (not shown herein).

In an example implementation or operation of the control and evaluation circuit 102, the evaluation is based on a time-differential detection scheme that is sensitive e.g., to a fast (e.g., abrupt) change in a sequence (time-series) of consecutive outputs of the measurement circuit 104 (e.g., the measured electrical characteristics), each associated to the same at least one sense circuit (e.g., sense circuit 106a) of the plurality of sense circuits 106 and 108. The measured electrical characteristics (e.g., an impedance) may refer to outputs as obtained after processing (e.g., filtering, combining, averaging, etc.) in the control and evaluation circuit 102. In some implementations or operations based on a time-differential detection scheme, presence of an object (e.g., object 110) is assumed, if at least one difference between a first measurement output associated to a sense circuit (e.g., sense circuit 106a) and at least one first time and a second measurement output associated to the same sense circuit and at least one second time exceeds a threshold. Using time-differential detection, an object can be detected when it enters or leaves the proximity of the at least one sense element (e.g., sense element 107a) or generally when it moves in the proximity of the at least one sense element.

In a further example implementation or operation of the control and evaluation circuit 102, the evaluation is based on a sense circuit-differential detection scheme that is sensitive to differences between measurement outputs associated to different sense circuits of the plurality of sense circuits (e.g., 106). This detection scheme may be also referred to as space-differential detection. In some implementations or operations based on a space-differential detection scheme, presence of an object (e.g., object 110) is assumed if at least one difference between a first measurement output associated to at least one first sense circuit (e.g., sense circuit 106a) and a second measurement output associated to at least one second sense circuit (e.g., sense circuit 106b) exceeds a threshold. In some implementations or operations of a true space-differential detection scheme, the plurality of measurement outputs used to determine a difference refer to substantially the same time. It may be appreciated that in certain cases, space-differential detection may be less sensitive and reliable than time-differential detection because sense circuits of the plurality of sense circuits 104a, 104b, ..., 104n may be at least partially differently (individually) affected by temperature, mechanical impacts, and ageing.

In some aspects, time-differential detection may be sensitive to movements of metallic structures in the environment of the sense element array (e.g., array 107). Such environmental effects may include movements of the metallic vehicle underbody structure when a vehicle is parked over the wireless power transfer structure. These movements may cause false detections in certain implementations of the multi-purpose detection circuit 100 that is solely based on a time-differential approach. Therefore, in some aspects, it may be desirable to mitigate such disturbance effects.

Combining the time-differential scheme with a space-differential scheme on top may be an approach to effectively discriminate such disturbance effects. In certain implementations or operations of a space-differential detection scheme, presence of an object is determined by evaluating at least one difference between a measurement output associated to at least one sense circuit (e.g., sense circuit 106a) and a reference value that is determined based on a plurality of measurement outputs each associated to a different sense circuit of the plurality of sense circuits (e.g., 106). This reference value may be e.g., a mean value, a median value (50th percentile), or any other percentile value that is derived from a histogram built upon the plurality of measurement outputs. It may be appreciated that this special detection scheme has the potential to discriminate environmental effects e.g., from a moving vehicle underbody that may produce changes in an electrical characteristic (e.g., an impedance) in a majority (cluster) of sense circuits. This special scheme may be considered as a mechanism that automatically adapts the detection threshold used by the control and evaluation circuit 102 for determining presence of an object (e.g., object 110). More specifically, in some implementations or operations, the control and evaluation circuit 102 automatically adjusts the reference value as described above. When the vehicle underbody is moving, the reference value may increase as well as the detection threshold. Increasing the detection threshold reduces the false detection rate but also the detection sensitivity (detection probability) to some extent. Therefore, a somewhat lower sensitivity may be accepted for an object entering the predetermined space while the vehicle is moving. As soon as the vehicle underbody comes to rest, the detection threshold is readjusted automatically, and the object detection circuit 100 may return to its ordinary sensitivity (detection probability) maintaining a specified false detection rate.

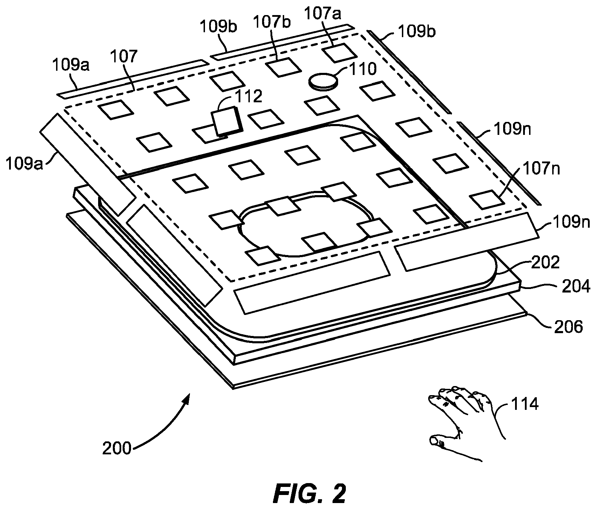

FIG. 2 illustrates an example implementation of a wireless power transfer structure 200 that is a portion of a WPT system including a portion of the multi-purpose detection circuit 100 of FIG. 1. The wireless power transfer structure 200 may depict either a wireless power transmitter that generates a magnetic field (e.g., at an operating frequency in the range from 80 - 90 kHz) for transferring power or a wireless power receiver that can couple and receive power via a magnetic field. It may be more likely that when integrated with a multi-purpose detection circuit 100, the wireless power transfer structure 200 may be a wireless power transmitter as power may be generally transferred from the ground or other upward facing surface where foreign objects (e.g., object 110 or 112) will generally come to a rest. However other implementations are possible, e.g., the multi-purpose detection circuit 100 or a portion thereof may be also integrated into a wireless power receiver (e.g., a vehicle-based wireless power transfer structure). The wireless power transfer structure 200 (also sometimes referred to as a "ground assembly" or "base bad") may be configured to wirelessly transmit or receive power.

The wireless power transfer structure 200 includes a coil 202 (e.g., a Litz wire coil) also referred to as the WPT coil that is configured to generate an alternating magnetic field when driven with a current by a power conversion circuit (not shown herein). The wireless power transfer structure 200 may further include a ferrite 204 structure configured to channel and/or provide a path for magnetic flux (e.g., may be arranged in one or more ferrite tiles). The wireless power transfer structure 200 may also include a metal shield 206 (also sometimes referred to as a back plate). The metal shield 206 is configured to prevent the magnetic field or associated electromagnetic emissions from extending far beyond a boundary determined by the shield 206 or at least to attenuate the magnetic field extending beyond that boundary. As an example, the shield 206 may be formed from aluminum.

FIG. 2 illustrates one example how the plurality of inductive sense elements (array 107) and the plurality of capacitive sense elements 109 of FIG. 1 may be integrated into the wireless power transfer structure 200.

FIG. 3 illustrates a vertical cut view of a portion 300 of a WPT system applicable to wireless electric vehicle charging. This portion 300 includes the ground-based (e.g., transmit) wireless power transfer structure 200 with reference to FIG. 2 and the vehicle-based (e.g., receive) wireless power transfer structure 310. The ground-based wireless power transfer structure 200 includes the shield (back plate) 206, a layer of ferrite 204, and a WPT coil 202 with reference to FIG. 2. It also includes a housing 328 configured to house the WPT coil 202, the ferrite 204, and the shield 206. In addition, the housing 328 is configured to house the plurality of inductive sense elements (array 107) and the plurality of capacitive sense elements (109) as part of the multi-purpose detection circuit 100 as illustrated in FIG. 2. In some implementations, the shield 206 may form a portion of the housing 328 as illustrated in FIG.3. Further, the housing 328 may be inclined along its perimeter from its edge toward its interior to form a ramp over which a vehicle may drive. The power conversion circuit (not shown herein) may be electrically connected to the WPT coil 202 or a portion or all may also be housed in the housing 328. In some aspects, the capacitive sense elements (e.g., the capacitive sense elements 109a, 109b, ..., 109n) may be oriented to be nonparallel with a plane defined by the array 107 of inductive sense elements. For example, the capacitive sense elements may be oriented to be substantially parallel to the inclined top surface of the housing 328 along the housing's perimeter.

The vehicle-based wireless power transfer structure 310 includes a WPT coil 312, a layer of ferrite 315, and a shield 316 made of an electrically conductive material. In some implementations, the shield 316 may be formed from a portion of the apparatus that the ferrite 315 and the WPT coil 312 are affixed to the metallic underbody of a vehicle 330. In this case, a housing 318 configured to house the WPT coil 312 and ferrite 315 is provided but that may not house the shield 316. However other implementations are possible where a conductive back plate is included in the housing 318. A power conversion circuit (not shown herein) may be electrically connected to the WPT coil 312 or a portion or all may also be housed in the housing 318.

As mentioned above and as illustrated in FIG. 3, the vehicle-based wireless power transfer structure 310 may also integrate at least one of an inductive passive beacon transponder 313 and a capacitive beacon transponder 314 e.g., for purposes of PD and VD as previously discussed. The inductive passive beacon transponder 313 may be configured to primarily interact with the inductive sense elements e.g., the inductive sense elements 107a, 107b, ..., 107n. In some implementations, the inductive passive beacon transponder 313 includes a transponder coil, a capacitive element to compensate for the gross reactance of the coil at the operating (sense) frequency of the multi-purpose detection circuit 100, and a passive impedance modulation circuit (these elements not shown in herein). The capacitive passive beacon transponder 314 may be configured to primarily interact with the capacitive sense elements e.g., the capacitive sense elements 109a, 109b, ..., 109n. In some implementations, the capacitive passive beacon transponder 314 includes a transponder electrode, an inductive element to compensate for the gross reactance of the electrode at the operating (sense) frequency of the multi-purpose detection circuit 100, and a passive impedance modulation circuit (these elements not shown in herein). In further implementations (not shown herein), the passive beacon transponder (e.g., passive beacon transponder 313) is configured to interact with both the inductive and capacitive sense elements of the multi-purpose detection circuit 100.

The ground-based (e.g., transmit) wireless power transfer structure 200 may be configured to generate a magnetic field 232. The vehicle-based wireless power transfer structure 310 may be configured to inductively receive power via the magnetic field. Furthermore, as the ground-based wireless power transfer structure 200 may be positioned on a ground or other top facing surface, an object (e.g., object 110 or 112) may come to rest at the top surface of the housing 328 as illustrated in FIG. 3. The object may thereby be potentially exposed to high levels of magnetic flux density if power is being transferred.

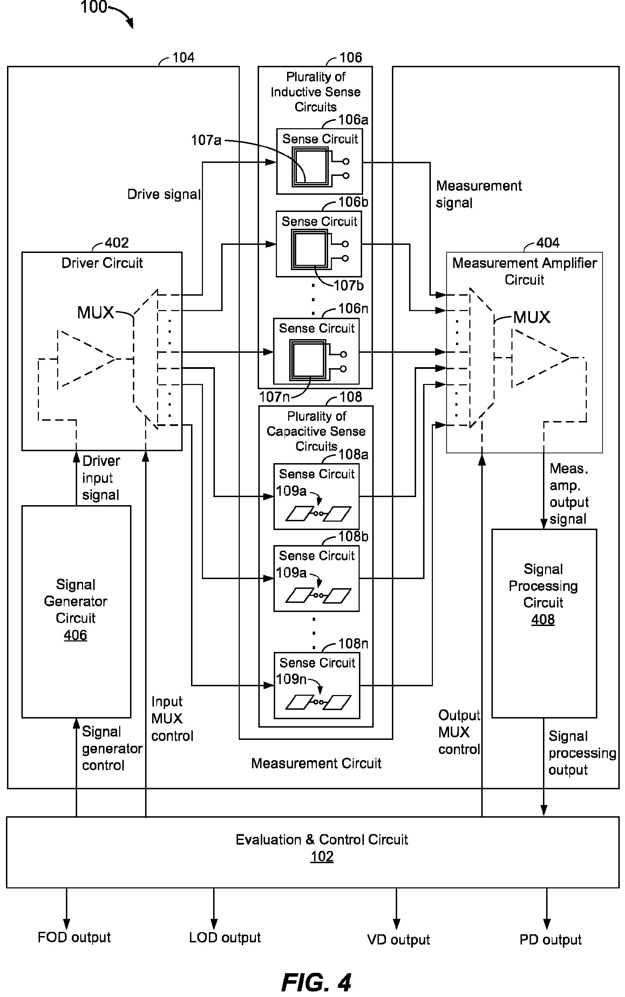

FIG 4 is a generic block diagram illustrating an example implementation or operation of a multi-purpose detection circuit 100. The circuit 100 includes the plurality of inductive sense circuits 106a, 106b, ...,106n, including the inductive sense elements 107a, 107b, ..., 107n, respectively, the plurality of capacitive sense circuits 108a, 108b,...,108n, including the capacitive sense elements 109a, 109b, ..., 109n, respectively, the measurement circuit 104, and the control and evaluation circuit 102 with reference to FIG. 1.

Each of the plurality of inductive sense circuits 106 may also include an associated capacitive element (not shown herein) to compensate for the gross reactance as presented at the terminals of the at least one inductive sense element at the sense frequency. Each of the plurality of capacitive sense circuits 108 may also include an associated inductive element (not shown herein) to compensate for the gross reactance as presented at the terminals of the at least one capacitive sense element at the sense frequency. At least one of the plurality of inductive and capacitive sense circuits also includes an impedance matching element (e.g., a transformer) for transforming the impedance of the sense circuit (e.g., sense circuit 108a) to match with an operating impedance range of the multi-purpose detection circuit 100. In an example implementation, each of the plurality of inductive sense circuits 106 is naturally matched with an operating impedance range without using an additional impedance matching element. However, the plurality of capacitive sense circuits 108 is not naturally matched, and therefore an additional impedance matching element (e.g., a transformer) is used. In another example implementation, it is vice-versa. In a further example implementation, both the plurality of inductive and capacitive sense circuits 106 and 108, respectively, include an additional impedance matching element.

The measurement circuit 104 is electrically connected to the plurality of inductive and capacitive sense circuits and configured for selectively and sequentially measuring one or more electrical characteristics (e.g., an impedance) in each of the plurality of inductive and capacitive sense circuits according to a predetermined time multiplexing scheme.

The control and evaluation circuit 102 is electrically connected to the measurement circuit 104 and configured to control time multiplexing (input multiplexer (MUX) control and output MUX control in FIG. 4) according to the predetermined time multiplexing scheme, to evaluate the one or more electrical characteristics as measured in each of the inductive and capacitive sense circuits, and to determine at least one of a presence of a foreign object (e.g., object 110 or 112), a living object (e.g., object 114), a vehicle (e.g., vehicle 330), a type of vehicle, and a vehicle position based on changes in the measured one or more electrical characteristics.

The measurement circuit 104 further includes a driver circuit 402, a measurement amplifier circuit 404, a signal generator circuit 406, and a signal processing circuit 408.

The driver circuit 402 including multiplexing (input multiplexing) is electrically connected to the plurality of inductive sense circuits 106 and the plurality of capacitive sense circuits 108 and configured to selectively and sequentially apply a drive signal (e.g., a current signal) at the sense frequency to each of the plurality of inductive sense circuits 106 and the plurality of capacitive sense circuits 108 based on a driver input signal generated by the signal generator circuit 406.

The measurement amplifier circuit 404 including multiplexing (output multiplexing) is electrically connected to the plurality of inductive sense circuits 106 and the plurality of capacitive sense circuits 108 and configured to selectively and sequentially amplify a measurement signal (e.g., a voltage signal) in each the plurality of inductive sense circuits 106 and the plurality of capacitive sense circuits 108 and to provide a measurement amplifier output signal indicative of the measurement signal in each of the plurality of sense circuits.

The signal generator circuit 406 electrically connected to the input of the driver circuit 402 is configured to generate the driver input signal.

The signal processing circuit 408 electrically connected to the output of the measurement amplifier circuit 404 is configured to receive and process the measurement amplifier output signal and to determine the one or more electrical characteristics in each of the plurality of inductive and capacitive sense circuits based on the driver input signal and the measurement amplifier output signal.

The dashed lines used in FIG. 4 emphasize that the components and their configuration in the driver circuit 402 and the measurement amplifier circuit 404 are illustrative, and other implementations may have these or other components configured to selectively and sequentially drive the plurality of sense circuits 106 and 108 with a drive signal and to selectively and sequentially amplify a measurement signal in each of the plurality of sense circuits 106 and 108. Furthermore, while certain circuit elements are described as connected between other elements, it should be appreciated that there may be other circuit elements in various implementations that may also be in between the two elements described as electrically connected (e.g., other elements interposed). To mention an example of an alternative implementation (not shown herein), multiplexing is common to both the driver circuit 402 and the measurement amplifier circuit 404.

Example implementations of the measurement circuit 104 and the control and evaluation circuit 102 are described in U.S. Patent No. 9,726,518, titled *Systems, Methods, and Apparatus for Detection of Metal Objects in a Predetermined Space,* U.S. Patent No. 9,921,045, titled *Systems, Methods, and Apparatus for Increased Foreign Object Detection Loop Array Sensitivity,* in U.S. Patent No. 10,295,693, titled *Systems, Methods, and Apparatus for Foreign Object Detection Loop Based on Inductive Thermal Sensing,* in U.S. Patent No. 10,302,795, titled *Systems, Methods, and Apparatus for Detecting Ferromagnetic Objects in a Predetermined Space,* in U.S. Patent No. 10,298,049, titled *Systems, Methods, and Apparatus for Detecting Metallic Objects in a Predetermined Space via inductive kinematic Sensing,* in U.S. Patent No. 11,046,193, titled *Foreign Object Detection Circuit Using Current Measurement,* in U.S. Patent No. 10,855,117, titled *Extended Foreign Object Detection Signal Processing,* and in U.S. Patent No. 11,002,874, titled *Foreign Object*

*Detection Circuit Using Mutual Impedance* Sensing.

In an example operation of the multi-purpose detection circuit 100, the sense signal is selectively and sequentially applied to each of the plurality of inductive sense circuits 106 and to each of the plurality of the capacitive sense circuits 108 according to a time division multiplexing scheme and in a round robin fashion. The sense signal for driving an inductive sense circuit (e.g., inductive sense circuit 106a) is applied in a time interval (time slot) allocated to that sense circuit and has a maximum duration equal or shorter than the duration of the time slot. The time frame corresponding to the sum of time slots allocated to the plurality of inductive sense circuits 106 and capacitive sense circuits 108 is also referred herein as to the scan cycle or to the repetition period.

In an aspect to reduce the duration of the scan cycle, a first sense signal is selectively and sequentially applied to each of a portion of the plurality of inductive sense circuits 106 and capacitive sense circuits 108 and a second sense signal is concurrently, selectively and sequentially applied to each of the remaining portions of inductive and capacitive sense circuits. Concurrently applying two or more sense signals reduces the scan cycle and may result in a reduced detection latency with respect to FOD and LOD and in an increased position update rate with respect to PD (e.g., using the passive beaconing approach as previously described).

In an example implementation and operation of the multi-purpose detection circuit 100, the first and the at least one concurrently applied second sense signal are sinusoidal signals of the same frequency.

In another example implementation and operation of the multi-purpose detection circuit 100, the first and the at least one concurrently applied second sense signal are sinusoidal signals but differ in frequency.

In a further example implementation and operation of the multi-purpose detection circuit 100, each of the first and the at least one concurrent second sinusoidal sense signals as applied in time slots allocated to the same sense circuit (e.g., sense circuit 106a) start with the same phase (e.g., zero-phase). In some implementations using more than two current sense signals, starting sense signals in time slots allocated to the same sense circuit with the same phase may help to mitigate interference caused by intermodulation effects as described in U.S. Patent Application No. 16/392,464 titled Extended Foreign Object Detection Signal Processing.

In some implementations and operations of the multi-purpose detection circuit 100, time slots of a scan cycle are reallocated based on some conditions (e.g., whether WPT is active or inactive). In an aspect, it may be desirable to reduce the detection latency with respect to LOD when WPT is active. Therefore, in an example operation, two or more time slots of a scan cycle are allocated to each of the capacitive sense circuits 108 when WPT is active. Conversely, the LOD function may not be required when WPT is inactive. Therefore, in an example operation, time slots of a scan cycle are only allocated to inductive sense circuits (e.g., to the plurality of inductive sense circuits 106) when WPT is inactive. In another example operation, two or more time slots of a scan cycle are allocated to each of the plurality of inductive sense circuits (e.g., inductive sense circuits 106) and one time slot is allocated to each of the plurality of capacitive sense circuits when WPT is inactive. This mode of operation may allow maintaining a limited LOD function when WPT is inactive (e.g., for purposes of monitoring proper functioning of the multi-purpose detection circuit 100 with respect to LOD). Moreover, the time spacing between time slots allocated to the same sense circuit in any of the scanning modes described above is maximized.

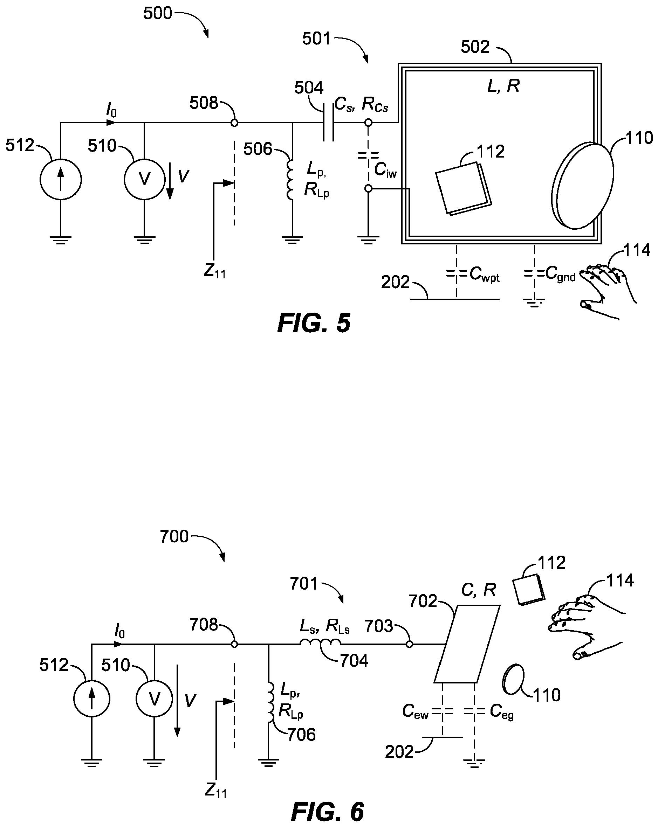

FIG. 5 illustrates an example implementations of a portion of the multi-purpose detection circuit 100 of FIG. 1 based on inductive sensing by measuring at least one electrical characteristic (e.g., a complex impedance). THis example is to illustrate the principle of the sensing and measurement technique and does not show all the details of a multi-purpose detection circuit 100. Particularly, for illustrative purposes, it only shows a single inductive sense circuit rather than the plurality of inductive sense circuits (e.g., the plurality of inductive sense circuits 106a, 106b, ..., 106n with reference to FIG. 1). Further, it does not show the details of the signal generation, signal processing, and evaluation as it may be required e.g., for determining at least one of a presence of a foreign object, a living object, a vehicle, a type of vehicle, and a position of the vehicle and as illustrated by the block diagram of FIG. 4.

The description of the circuit 500 of FIG. 5 is based on measuring a one-port impedance $Z_{11}$ at the sense frequency, e.g., using a sinusoidal sense signal. However, this should not exclude implementations configured to measure other electrical characteristics using other sense signal waveforms (e.g., multi frequency signals, pulse signals, pseudo random signals, etc.).

In some implementations, the sense signal is a high frequency signal with a spectrum substantially in the megahertz (MHz) range (e.g., in a frequency range from 2.5 MHz to 3.5 MHz). In other implementations, the sense signal is constraint to the frequency range from 3.155 MHz to 3.400 MHz for frequency regulatory reasons. In some geographic regions or countries, this frequency range may permit higher emission levels e.g., a magnetic field strength H < 13.5 dBμA/m at 10 m from the radiating parts of the multi-purpose detection circuit 100 (e.g., from the inductive sense element array 107).

The ground symbols shown in the schematic diagrams of FIG. 5 indicate a network node on ground potential referred to as the "circuit ground". However, this should not exclude non-ground-based implementations or implementations that use different grounds on different potentials.

The circuit 500 of FIG. 5 illustrates an example implementation based on measuring a complex impedance $Z_{11}$ of a one-port inductive sense circuit 501 (shown in FIG. 5 as the circuit on the right side of the dashed line). More specifically,

the impedance $Z_{11}$ is measured at the measurement port 508 (indicated in FIG. 5 by a terminal and a dashed line) by applying, from a current source 512 (sense circuit current source 512), a sinusoidal current $I_0$ at the sense frequency with a defined amplitude and phase and by measuring, using a voltage measurement circuit 510, the complex open-circuit voltage $V$ (amplitude and phase) as indicated in FIG. 5. The impedance $Z_{11}$ is then determined by dividing the measured voltage $V$ by the defined (known) current $I_0$. This impedance measurement technique is also referred herein as to the current source voltage measurement technique.

The sense circuit 501 comprises a single-coil sense element (e.g., sense coil 502) having an inductance $L$ and an equivalent series resistance $R$, a series capacitor 504 having a capacitance $C_s$ and an equivalent series resistance $R_{Cs}$ electrically connected in series to the sense coil 502, and a parallel inductor 506 having an inductance $L_p$ and an equivalent series resistance $R_{Lp}$ electrically connected to the capacitor 504 in parallel to the measurement port 508. The circuit 500 further illustrates the sense signal current source 512 and the voltage measurement circuit 510 both electrically connected to the sense circuit 501 at the measurement port 508.

The equivalent series resistance $R$ includes all electrical losses intrinsic to the sense coil 502 and extraneous losses as they may occur in its surrounding materials (e.g., the Litz wire of the WPT coil 202 and the ferrite of the wireless power transfer structure 200 where the sense coil 502 may be integrated). These materials may interact with the magnetic field as generated by the sense coil 502 causing losses.

The circuit 500 of FIG. 5 also indicates parasitic capacitances (by dashed lines) such as the sense coil's 502 self-capacitance (or intra winding capacitance) $C_{iw}$, the sense coil's 502 ground capacitance $C_{gnd}$, and the capacitance $C_{wpt}$ between the sense coil 502 and the WPT coil 202 with reference to FIG. 2 (abstracted in FIG. 5 by a line). These capacitances and the associated electric stray fields may cause a certain sensitivity of the circuit 500 on substantially non-conductive, dielectric objects (e.g., object 112 or 114). For the following considerations, it is assumed that the impact of these capacitances on the sense coil's 502 impedance is negligible.

The sense circuit 501 may be configured to provide a local minimum in the impedance magnitude function $|Z_{11,0}(\omega)|$ substantially at a nominal sense frequency, where $Z_{11,0}$ refers to the impedance as presented by the sense circuit 501 at the measurement port 508 in absence of a foreign object, and $\omega$ to the angular frequency. The minimum of the impedance magnitude is also referred to herein as the series resonance by definition and applies to the inductive sense circuits with reference to FIGs. 5A to 5E. Alternatively, the sense circuit 501 may be configured to provide a local minimum in the admittance magnitude function $|Y_{11,0}(\omega)|$ substantially at the nominal sense frequency, where $Y_{11,0}$ ($= 1/Z_{11,0}$) refers to the admittance as presented by the sense circuit 501 at the measurement port 508 in absence of a foreign object. The minimum of the admittance magnitude is also referred to herein as the parallel resonance by definition.

In an example series resonant configuration of the sense circuit 501, the reactance of the series capacitor 504 substantially compensates for the reactance of the sense coil 502 at the nominal sense frequency providing an impedance $Z_{11,0}$ that is substantially real (resistive). In this configuration, the inductance $L_p$ of the parallel inductor 506 may be similar or larger than the inductance $L$ of the sense coil 502. In other terms, the impedance magnitude of the parallel inductor 506 may be substantially (e.g., 10 times) higher than the impedance magnitude $|Z_{11,0}|$ as presented at the nominal sense frequency. In this configuration, the parallel inductor 506 may exert a negligible impact on the impedance $|Z_{11,0}|$ at the nominal sense frequency.

In an example parallel resonant configuration of the sense circuit 501, the reactance of the series capacitor 504 overcompensates for the reactance of the sense coil 502 at the nominal sense frequency. The residual capacitive susceptance of the series connection of the capacitor 504 and the sense coil 502 is substantially compensated for by the susceptance of the parallel inductor 506 providing an admittance $Y_{11,0}$ that is substantially real (resistive). In this configuration, the inductance $L_p$ of the parallel inductor 506 may be smaller, similar, or larger than the inductance $L$ of the sense coil 502. Stated in other terms, the admittance magnitude of the parallel inductor 506 may be substantially (e.g., 20 times) higher than the admittance magnitude $|Y_{11,0}|$ as presented at the nominal sense frequency. In this configuration, the parallel inductor 506 exerts a significant impact on the admittance $Y_{11,0}$ at the nominal sense frequency.

In some implementations, the parallel inductor 506 together with the series capacitor 504 are used for purposes of resonance tuning and impedance transformation e.g., to transform the impedance $Z_{11}$ to match the sense circuit 501 with an operating impedance range as previously mentioned with reference to FIG. 1. The inductance ratio $L/L_p$ may be a parameter to control the impedance magnitude $|Z_{11,0}|$.

Impedance transformation may be particularly effective, if the sense circuit 501 is configured for parallel resonance. More specifically, increasing the inductance ratio $L/L_p$, while maintaining series resonance at the nominal sense frequency, may substantially increase the admittance magnitude $|Y_{11,0}|$ at the nominal sense frequency. Therefore, in an aspect, the sense circuit 501 in the parallel resonant configuration may be considered as an alternative to the sense circuit 521 illustrated in FIG. 5B using a transformer.

Increasing the inductance ratio $L/L_p$, while maintaining resonance at the nominal sense frequency, may also somewhat decrease the impedance magnitude $|Z_{11,0}|$ as presented at the nominal sense frequency in the series resonant configuration of the sense circuit 501. However, impedance transformation may be limited and far less effective than that of the series resonant configuration.

In another aspect of resonance tuning, the series capacitor 504 may include a variable capacitor whose capacitance $C_s$ can be electronically controlled (e.g., a direct current (DC) controlled capacitor) forming a variable capacitor 504. In some implementations of the circuit 500, a variable capacitor 504 is used to compensate for a temperature drift, an ageing, or a detuning of the sense circuit 701 caused by an external impact and to maintain its resonance substantially at the nominal sense frequency. Similarly, the parallel inductor 506 may include a variable inductor whose inductance $L_p$ can be electronically controlled (e.g., a DC controlled inductor) forming a variable inductor 506. In a further aspect, the variable capacitor 504 and variable inductor 506 in combination are used to vary the impedance $|Z_{11,0}|$ of the sense circuit 501.

In yet another aspect, the series capacitor 504 in combination with the parallel inductor 506 form a 2nd order high pass filter to attenuate a low frequency disturbance component in the voltage $V$ emanating from the voltage inductively coupled into the sense coil 502 by the magnetic and electric field as generated during wireless power transfer. This high pass filter may reduce dynamic range requirements of the voltage measurement circuit 510 and may also protect the voltage measurement circuit 510 and the current source 512 from being overloaded. Stated in other words, it may reduce non-linear distortion effects (e.g., signal clipping) in a voltage measurement circuit 510 with a limited dynamic range.

With reference to FIG. 1, the sense circuit 501, the sense coil 502, the series capacitor 504, and the parallel inductor 506 may correspond e.g., to the inductive sense circuit 106a, the inductive sense element 107a, and the associated capacitive element, respectively. The current source 512 may include the signal generator circuit 406 and the driver circuit 402, while the voltage measurement circuit 510 may include the measurement amplifier circuit 404 and the signal processing circuit 408 with reference to FIG. 4.

FIG. 6 illustrates an example implementation of another portion of the multi-purpose detection circuit 100 of FIG. 1 based on capacitive sensing by measuring at least one electrical characteristic (e.g., a complex impedance). This example is to illustrate the principle of the sensing and measurement technique and do not show all the details of a multi-purpose detection circuit 100. Particularly, for illustrative purposes, it only shows a single capacitive sense circuit rather than the plurality of capacitive sense circuits (e.g., the plurality of capacitive sense circuits 108a, 108b, ..., 108n with reference to FIG. 1). Further, it does not show the details of the signal generation, signal processing, and evaluation as it may be required e.g., for determining at least one of a presence of a foreign object, a living object, a vehicle, a type of vehicle, and a position of the vehicle and as illustrated by the block diagram of FIG. 4.

The description of the circuit 700 is based on measuring a one-port impedance $Z_{11}$ at the sense frequency e.g., using a sinusoidal sense signal. However, this should not exclude implementations configured to measure other electrical characteristics using other sense signal waveforms (e.g., multi frequency signals, pulse signals, pseudo random signals, etc.).

In some implementations, the sense signal is a high frequency signal with a spectrum substantially in the MHz range (e.g., in a range from 2.5 MHz to 3.5 MHz). In other implementations, the sense signal is constraint to the range from 3.155 MHz to 3.400 MHz for frequency regulatory reasons as previously mentioned in connection with FIG. 5. In some geographic regions or countries, this frequency range may permit higher magnetic field strength level H in the specified distance from the plurality of capacitive sense elements (e.g., the plurality of capacitive sense elements 109 of the multi-purpose detection circuit 100).

The ground symbols shown in the schematic diagram of FIG. 6 indicates a network node on ground potential referred to as the "circuit ground". However, this should not exclude non-ground-based implementations or implementations that use different grounds on different potentials.

The circuit 700 of FIG. 6 illustrates an example implementation based on measuring a complex impedance $Z_{11}$ of a one-port capacitive sense circuit 701 (shown in FIG. 6 as the circuit on the right side of the dashed line). More specifically, the impedance $Z_{11}$ is measured at the measurement port 708 (indicated in FIG. 6 by a terminal and a dashed line) by applying, from the current source 512, a sinusoidal current $I_0$ at the sense frequency (e.g., in the MHz range) with a defined amplitude and phase and by measuring, using a voltage measurement circuit 510, the complex open-circuit voltage $V$ (amplitude and phase) as previously described with reference to FIG. 5.

The sense circuit 701 comprises a single-electrode capacitive sense element 702 (single-ended sense electrode 702) having a signal terminal 703, a capacitance $C$ and an equivalent series resistance $R$, a series inductor 704 having an inductance $L_s$ and an equivalent series resistance $R_{Ls}$ electrically connected in series to the sense electrode 702 at the signal terminal 703, and a parallel inductor 706 having an inductance $L_p$ and an equivalent series resistance $R_{Lp}$ electrically connected to the series inductor 704 and in parallel to the measurement port 708.

It may be appreciated that electrical losses in the series inductor 704 and in the parallel inductor 706 are the most prominent losses in the capacitive sense circuit 701. These losses may prevail the electrical losses intrinsic to the sense electrode 702 and extraneous losses in its surrounding materials (e.g., the Litz wire of the WPT coil 202, the ferrite, and the plastic housing of the wireless power transfer structure 200 where the sense electrode 702 may be integrated). These materials may interact with the predominantly electric field as generated by the sense electrode 702 causing some losses that may be included in the equivalent series resistance $R$ as indicated in FIG. 6.

The sense electrode's 702 capacitance $C$ may include various capacitances as indicated in FIG. 6 by dashed lines. Particularly, it may include capacitance $C_{eg}$ of the sense electrode 702 towards ground and a capacitance $C_{ew}$ towards the WPT coil 202 with reference to FIG. 2. The circuit 700 further illustrates the sense signal current source 512 and the voltage measurement circuit 510 both electrically connected to the sense circuit 701 at the measurement port 708.

The sense electrode 702 may also include a self-inductance (not indicated in FIG. 6). The associated magnetic fields may interact with a metallic object (e.g., object 110). However, this effect may be insignificant compared to that of the electric field that also interacts with a metallic object (e.g., object 110).

The sense circuit 701 may be configured to provide a local minimum in the impedance magnitude $|Z_{11,0}(\omega)|$ (series resonance) substantially at the nominal sense frequency (e.g., at 3 MHz), where $Z_{11,0}$ refers to the impedance as presented by the sense circuit 701 at the measurement port 708 in absence of a foreign object with reference to FIG. 3. Alternatively, the sense circuit 701 may be configured to provide a local minimum of the admittance magnitude function $|Y_{11,0}(\omega)|$ (parallel resonance) substantially at the nominal sense frequency, where $Y_{11,0} (= 1/Z_{11,0})$ refers to the admittance as presented by the sense circuit 701 at the measurement port 508 in absence of a foreign object.

In an example series resonant configuration of the sense circuit 701, the reactance of the series inductor 704 substantially compensates for the reactance of the sense electrode 702 at the nominal sense frequency providing an impedance $Z_{11,0}$ that is substantially real (resistive). In this configuration, the inductance $L_p$ of the parallel inductor 706 may be similar or larger than the inductance $L_s$ of the series inductor 704. In other terms, the impedance magnitude of the parallel inductor 706 may be substantially (e.g., 10 times) higher than the impedance magnitude $|Z_{11,0}|$ as presented at the nominal sense frequency. In this configuration, the parallel inductor 706 may exert a negligible impact on the impedance $|Z_{11,0}|$ at the nominal sense frequency.

In an example parallel resonant configuration of the sense circuit 701, the reactance of the series inductor 704 undercompensates for the reactance of the sense electrode 702 at the nominal sense frequency. The residual capacitive susceptance of the series connection of the inductor 704 and the sense electrode 702 is substantially compensated for by the susceptance of the parallel inductor 706 providing an admittance $Y_{11,0}$ that is substantially real (resistive). In this configuration, the inductance $L_p$ of the parallel inductor 706 may be smaller, similar, or larger than the inductance $L_s$ of the series inductor 704. Stated in other terms, the admittance magnitude of the parallel inductor 706 may be substantially (e.g., 20 times) higher than the admittance magnitude $|Y_{11,0}|$ as presented at the nominal sense frequency. In this configuration, the parallel inductor 706 exerts a significant impact on the admittance $Y_{11,0}$ at the nominal sense frequency.

In some implementations, the parallel inductor 706 together with the series inductor 704 are used for purposes of resonance tuning and impedance transformation, e.g., to transform the impedance $Z_{11}$ to match the sense circuit 701 with an operating impedance range as previously mentioned with reference to FIG. 1. The inductance ratio $L_s/L_p$ may be a parameter to control the impedance magnitude $|Z_{11,0}|$.

Impedance transformation may be particularly effective, if the sense circuit 701 is configured for parallel resonance. More specifically, increasing the inductance ratio $L_s/L_p$, while maintaining parallel resonance at the nominal sense frequency, may substantially increase the admittance $|Y_{11,0}|$ of the parallel resonant configuration at the nominal sense frequency.

Increasing the inductance ratio $L_s/L_p$, while maintaining resonance at the nominal sense frequency, may also somewhat decrease the impedance $|Z_{11,0}|$ as presented at the nominal sense frequency in the series resonant configuration of the sense circuit 701. However, impedance transformation may be limited and far less effective than that of the parallel resonant configuration.

In another aspect of resonance tuning, at least one of the series inductor 704 and the parallel inductor 706 include a variable inductor as previously discussed with reference to FIG. 5. In some implementations of the circuit 70, at least one of the variable inductors 704 and 706 is used to compensate for a temperature drift, an ageing, or a detuning of the sense circuit 701 caused by an external impact and to maintain its resonance substantially at the nominal sense frequency. In a further aspect, the variable inductor 704 in combination with the variable inductor 706 are used to vary the impedance $|Z_{11,0}|$ of the sense circuit 711.

In yet another aspect, the sense electrode's 702 capacitance C in combination with the parallel inductor 706 form a 2nd order high pass filter to attenuate a low frequency disturbance component in the voltage $V$ for purposes as previously discussed with reference to FIG. 5. This low frequency disturbance component may emanate from a disturbance current capacitively coupled into the sense electrode 702 (e.g., via capacitance $C_{ew}$) during wireless power transfer.

With reference to FIG. 1, the sense circuit 701, the sense electrode 702, and the series inductor 704 may correspond e.g., to the capacitive sense circuit 108a, the capacitive sense element 109a (comprising a double-ended sense electrode that may be electrically connected in parallel to form a single-ended sense electrode), and the associated inductive element, respectively. The current source 512 may include the signal generator circuit 406 and the driver circuit 402, while the voltage measurement circuit 510 may include the measurement amplifier circuit 404 and the signal processing circuit 408 with reference to FIG. 4.

In some implementations, the current source 512 may be characterized by a quasi-ideal current source and the voltage measurement circuit 510 by a quasi-ideal voltage measurement circuit as previously defined with reference to FIG. 5.

Though not shown herein, other impedance measurement techniques (e.g., the voltage source current measurement technique) may also be contemplated as previously discussed with reference to the circuit 500 of FIG. 5.

Further, in some implementations, measurement of the voltage V and thus of the impedance $Z_{11}$ may be affected by noise and other disturbance signals reducing a detection sensitivity of the multi-purpose detection circuit 100. The noise may include circuit intrinsic noise as generated in active and passive components of the circuit 700 of FIG. 6. It may also include quantization noise e.g., generated in a digital implementation of the signal generator circuit 406 and the signal processing circuit 408 with reference to FIG. 4. Other disturbance signals may emanate from sources external to the circuit 700 (e.g., from the WPT system during wireless power transfer, from a switched-mode power supply, from a digital processing unit, etc.). These circuit extrinsic disturbance signals may be capacitively coupled (e.g., via capacitance $C_{ew}$) to the sense electrode 702 and may include the fundamental and harmonics of the WPT operating frequency and other switching noise components as generated by the WPT system. Therefore, in some implementations, the voltage measurement circuit 510 includes a filter to selectively filter the sense signal and to suppress noise and other disturbance signal components as previously discussed with reference to FIG. 5

Moreover, in implementations employing a selective voltage measurement circuit 510 as discussed above, the sense signal waveform as generated by the current source 512 and the corresponding filter of the voltage measurement circuit 510 are adapted e.g., to improve the SNR and consequently to improve the detection sensitivity as previously discussed with reference to FIG. 5.

With reference to FIG. 1, FIG. 6 also illustrates the non-living objects 110 and 112 and the living object 114 proximate to the sense electrode 702. Presence of the object 110, 112, 114, or vehicle 330 may cause a change in one or more electrical characteristics of the sense circuit 701. As non-limiting examples, it may cause a change in the capacitance $C$ and in the equivalent series resistance $R$ resulting in an impedance change $\varDelta Z$ with respect to the impedance $Z_{11,0}$ as measured in absence of a foreign object with reference to FIG. 3. Presence of an object (e.g., object 114) may be determined if $\varDelta Z$ satisfies certain criteria (e.g., the magnitude of $\varDelta Z$ exceeds a detection threshold). Though not shown in FIG. 6, a change $\varDelta Z$ in the measured impedance $Z_{11}$ may also be caused by the underbody of a vehicle or by the vehicle-based wireless power transfer structure (e.g., vehicle 330 and vehicle-based wireless power transfer structure 310 with reference to FIG. 3), which may indicate presence of a vehicle above the sense electrode 702. Further, an impedance change $\varDelta Z$ may also be caused by a substantially conductive (metallic) object (e.g., object 110) proximate to the sense electrode 702 since it also interacts with the electric field as generated by the sense electrode 702. Stated in other terms, a metal object (e.g., object 110) proximate to the sense electrode 702 may change one or more the capacitances $C_{eg}$ and $C_{ew}$ as illustrated in FIG. 6 as well as the self-inductance as previously mentioned.

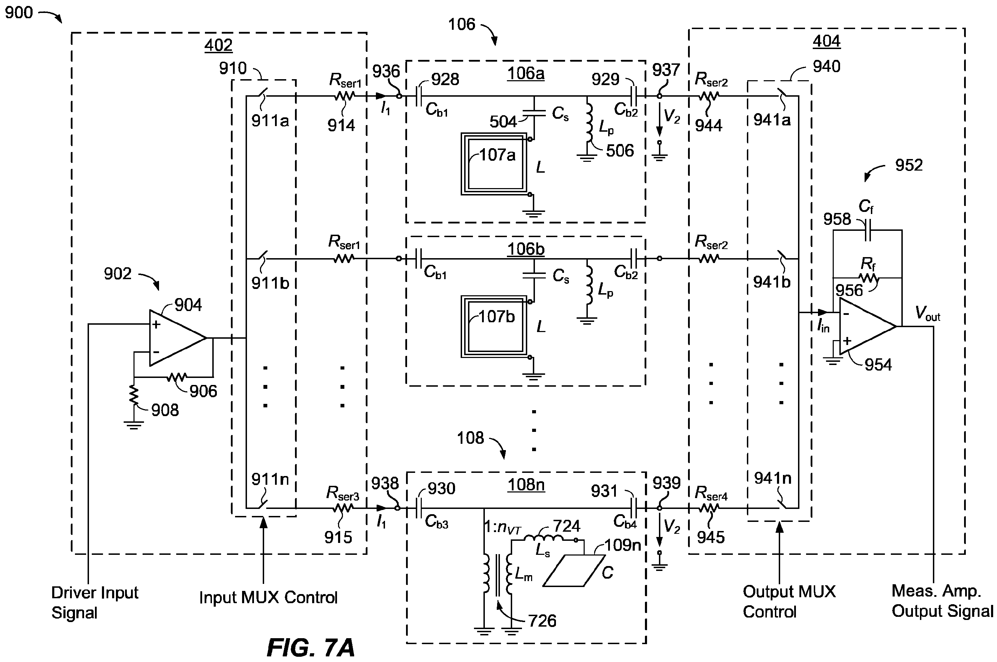

FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 6FIG. 7A is a circuit diagram of a circuit 900 illustrating an example implementation of a portion of a multi-purpose detection circuit 100. The circuit 900 of FIG. 7A illustrates an analog front-end circuit portion of the multi-purpose detection circuit 100 with reference to FIGs. 1 and 4. FIG. 7A excludes various other signal generation, processing, control, and evaluation circuits (e.g., as shown in FIG. 4) that may be needed in some implementations of a multi-purpose detection circuit 100. The circuit 900 implements inductive and capacitive sensing measuring an impedance based on the current source voltage measurement approach as previously described in connection with FIGs. 5 and 6, respectively.

The circuit 900 may be subdivided into a driver circuit 402, a plurality of inductive sense circuits 106, a plurality of capacitive sense circuits 108, and a measurement amplifier circuit 404 with reference to the generic block diagram of FIG. 4. The driver circuit 402 and the measurement amplifier circuit 404 constitute a portion of the measurement circuit 104 with reference to FIGs. 1 and 4. The plurality of inductive sense circuits 106 includes sense circuits 106a, 106b, ..., 106n (106n not shown in FIG. 7A for purposes of illustration). The plurality of capacitive sense circuits 108 includes sense circuits 108a, 108b, ..., 108n, (108a and 108b not shown in FIG. 7A for purposes of illustration). The dots indicated in FIG. 7A shall indicate that the number of inductive sense circuits 106 and/or the number of capacitive sense circuits 108 may be greater than three as previously noted with reference to FIG. 1.

In the example implementation shown in FIG. 7A, each of the plurality of inductive sense circuits 106 have an identical circuit topology. Likewise, each of the plurality of capacitive sense circuits 108 have an identical circuit topology. Therefore, descriptions given below for the inductive sense circuit 106a also apply to the other inductive sense circuits (e.g., 106b) and descriptions given below for the capacitive sense circuit 108n also apply to the other capacitive sense circuits (e.g., 108a).

Each of the plurality of inductive sense circuits 106 provides a first measurement port 936 (indicated in FIG. 7A by a terminal) for driving the inductive sense circuit (e.g., sense circuit 106) with an electrical current $I_1$ (as indicated in FIG. 7A) and a second measurement port 937 (indicated in FIG. 7A by a terminal) for measuring an electrical voltage $V_2$ (as indicated in FIG. 7A) e.g., in response to the current $I_1$. Therefore, the sense circuits 106 may be considered as two-port circuits. Likewise, each of the plurality of capacitive sense circuits 108 provides a first measurement port 938 (indicated in FIG. 7A by a terminal) for driving the capacitive sense circuit (e.g., sense circuit 108n) with the current $I_1$ (as indicated in

FIG. 7A) and a second measurement port 939 (indicated in FIG. 7A by a terminal) for measuring the voltage $V_2$ (as indicated in FIG. 7A) e.g., in response to the current $I_1$. Therefore, the sense circuits 108 may be considered as two-port circuits.

The driver circuit 402 includes an input multiplexer circuit 910 to selectively (e.g., sequentially) drive each of the plurality of sense circuits 106 and 108 with the current $I_1$. Likewise, the measurement amplifier circuit 404 includes an output multiplexer circuit 940 configured to selectively (e.g., sequentially) measure the voltage $V_2$ in each of the plurality of sense circuits 106 and 108. More specifically, but not indicated in FIG. 7A for purposes of illustration, the current $I_1$ driving the sense circuit 106a may be denoted by $I_{1a}$, the current $I_1$ driving the sense circuit 106b may be denoted as $I_{1b}$, etc. Likewise, the voltages $V_2$ in the sense circuits 106a and 106b may be denoted by $V_{2a}$ and $V_{2b}$, respectively.

The circuit 900 may be configured and operated in a mode to selectively (e.g., sequentially) measure an intra-sense circuit transimpedance $Z_{21}$ e.g., between the measurement ports 936 and 937 of each of the plurality of the sense circuits 106. This intra-sense circuit transimpedance $Z_{21}$ and may be defined for the sense circuit 106a as:

$$Z_{2a1a} \approx V_{2a} / I_{1a} \qquad (1)$$

For certain configurations of the sense circuits 106 and 108 (example given below), the two-port transimpedance $Z_{21}$ substantially equals the one-port impedance $Z_{11}$ as it may be measured at the first measurement port (e.g., measurement port 936) with the second measurement port (e.g., measurement port 937) open-circuited.

However, the circuit 900 may also be configured and operated in a mode to selectively (e.g., sequentially) measure an inter-sense circuit transimpedance $Z_{21}$ e.g., between each of a plurality of pairs of sense circuits associated with neighboring sense elements (e.g., inductive sense element 107a and 107b) providing sufficient cross-coupling. The inter-sense circuit transimpedance $Z_{21}$ as measured between the measurement port 936 of sense circuit 106a and the measurement port 937 of sense circuit 106b may be defined as:

$$Z_{2a1b} \approx V_{2b} / I_{1a} \qquad (2)$$

In some implementations or operations, inter-sense circuit transimpedance $Z_{21}$ measurements are performed between pairs of inductive sense circuits (e.g., inductive sense circuits 106a and 106b) and between pairs of capacitive sense circuits (e.g., capacitive sense circuits 108a and 108b). For simplicity, the intra-sense circuit transimpedance $Z_{21}$ herein is often referred to as the impedance $Z_{11}$ and the inter-sense circuit transimpedance $Z_{21}$ as the transimpedance $Z_{21}$. However, in a strict sense, both $Z_{11}$ and $Z_{21}$ may represent a transimpedance.

In an aspect, an object (e.g., object 110) proximate to at least one of the neighboring sense elements (e.g., 107a and 107b) may change both the impedance $Z_{11}$ and the transimpedance $Z_{21}$. Therefore, additionally measuring $Z_{21}$ may improve the detection reliability of the multipurpose detection circuit 100. Example implementations and operations of object detection circuits configured to measure both the impedance $Z_{11}$ and the transimpedance $Z_{12}$ are described in U.S. Patent application 16/358,534, titled *Foreign Object Detection Circuit Using Mutual Impedance* Sensing.

The inductive sense circuit 106a includes an inductive sense element 107a including a sense coil (e.g., sense coil 502 of FIG. 5) with an inductance $L$, a first capacitor (e.g., capacitor 504 of FIG. 5) with capacitance $C_s$, an inductor (e.g., inductor 506 of FIG. 5) with an inductance $L_p$, a second capacitor 928 with a capacitance $C_{b1}$, and a third capacitor 929 with a capacitance $C_{b2}$. The first capacitor 504 is electrically connected in series to the inductive sense element 107a that also connects to ground. The inductor 506 is electrically connected in parallel to the series circuit of capacitor 504 and inductive sense element 107a. The second capacitor 928 capacitively couples the series circuit capacitor 504 and inductive sense element 107a to the measurement port 936, while the third capacitor 929 capacitively couples to the measurement port 937.

In an example implementation or configuration of the circuit 900 of FIG. 7A, each of the plurality of inductive sense circuits 106 is configured (tuned) to provide a minimum of the impedance $|Z_{11}|$ (series resonance) substantially at the sense frequency as previously discussed with reference to the circuit 500 of FIG. 5.

In some implementations, at least the capacitor 504 is of a type with a low temperature coefficient providing high thermal stability (e.g., a NP0-type capacitor) reducing thermal drift of an electrical characteristic (e.g., an impedance $Z_{11}$) as measured at each of the plurality of inductive sense circuits 106a, 106b, ..., 106n. In other implementations, the capacitor 504 is a temperature compensation capacitor configured to compensate at least a portion of a temperature drift of the inductive sense element 107a. In a further aspect, the inductor 506 may use a ferrite core or may be an air coil e.g., for purposes of a higher linearity.

In yet further implementations of the circuit 900 using a printed circuit board (PCB), the plurality of inductors 506 is arranged to reduce a magnetic field coupling between neighboring inductors 506, e.g., by an alternating orientation. In yet other implementations, the inductor 506 is electromagnetically shielded to reduce at least one of a magnetic field coupling between neighboring inductors 506 and a disturbance voltage induced into the inductor 506 e.g., by the magnetic field as generated by the wireless power transfer structure (e.g., wireless power transfer structure 200 with reference to FIGs 2 and 3).

Moreover, as previously mentioned in connection with the circuit 500 of FIG. 5, the first capacitor 504 together with the parallel inductor 506 form a 2nd order high pass filter to attenuate a low frequency disturbance component (e.g., at the WPT frequency) in the voltage $V$ as previously discussed with reference to FIG. 5. The capacitor 504 together with the parallel inductor 506 may be configured to attenuate this low frequency disturbance component to a level e.g., significantly below the level of the voltage $V_2$ in response to the respective current $I_1$ at the sense frequency. Therefore, this high pass filter may substantially reduce dynamic range requirements in the measurement amplifier circuit 404 and in a further processing (e.g., in the signal processing circuit 408 with reference to FIG. 4). It may also reduce any cross-modulation effects between any low frequency signals at the WPT operating frequency (fundamental and harmonics thereof) and the sense signal at the sense frequency. Cross-modulation may be produced e.g., by non-linear distortion effects in the measurement amplifier circuit 404. At the sense frequency, this high pass filter may exert a minor impact on the voltage $V_2$ and thus on the measured impedance $Z_{11}$ and which may be corrected in a further processing (e.g., in the signal processing circuit 408 of FIG. 4). Any phase shift caused by this high pass filter may be determined e.g., by performing a calibration as previously discussed with reference to FIG. 5.

The second capacitor 928 may be needed in some implementations to block any DC flow at the output of the driver circuit 402. In an aspect, the capacitor 928 may also help to attenuate any residual low frequency voltage component (e.g., at the WPT operating frequency) at the output of the driver circuit 402. Moreover, in some implementations, it may also be used to compensate or partially compensate for the effect of the reactance of parallel inductor 506 in the measured impedance (e.g., $Z_{11}$) and hence to reduce an error in the measured angle arg$\{ΔZ\}$ as previously discussed with respect to FIG. 5. Likewise, the third capacitor 929 may be needed in some implementations to block any DC flow at the input of the measurement amplifier circuit 404. In some aspect, the capacitor 929 may also help to attenuate any residual low frequency current component (e.g., at the WPT operating frequency) at the input of the measurement amplifier circuit 404. Moreover, in some implementations, it may also help to compensate or partially compensate for the effect of the reactance of the parallel inductor 506 in the measured impedance $Z_{11}$ as discussed with reference to FIG. 5. In implementations or configurations using a capacitor 929 providing a reactance substantially smaller than an input impedance of the measurement amplifier circuit 404, the intra-sense circuit transimpedance $Z_{21}$ substantially equals the impedance $Z_{11}$ as discussed above.

The impedance $|Z_{11}|$ of the inductive sense circuit 106a at series resonance is assumed in the suitable measuring range of the measurement circuit (e.g., measurement circuit 104 with reference to FIG. 4). Therefore, the inductive sense circuits 106 as illustrated in FIG. 7A do not include a transformer (e.g., transformer 526 of FIG. 5B).

The capacitive sense circuit 108n includes a capacitive sense element 109n including a sense electrode having a capacitance $C$, a series inductor 724 having an inductance $L_s$, and a transformer 726 providing a primary and secondary port, a secondary-referred main inductance $L_m$ and a voltage transformation ratio 1:$n_{VT}$. Further, it includes a first capacitor 930 with a capacitance $C_{b3}$, and a second capacitor 931 with a capacitance $C_{b4}$ e.g., for purposes as previously discussed with reference to the inductive sense circuits 106 of FIG. 7A. The inductor 724 is electrically connected in series to the capacitive sense element 109n. The series circuit of inductor 724 and capacitive sense element 109n is electrically connected to the transformer's 726 secondary port that also connects to ground. The transformer's 726 primary port is capacitively coupled to the measurement ports 938 and 939 via capacitors 930 and 931, respectively, and also electrically connects to ground.

In some implementations, the transformer 726 comprises a primary winding and a galvanically isolated secondary winding, both windings wound on a common ferrite core. An example transformer 726 configured for a nominal sense frequency in the MHz-range uses a two-hole ferrite core.

In the example implementation or configuration of the circuit 900 of FIG. 7A, each of the plurality of capacitive sense circuits 108 is configured (tuned) to provide a minimum of the impedance magnitude $|Z_{11}|$ (series resonance) substantially at the sense frequency.

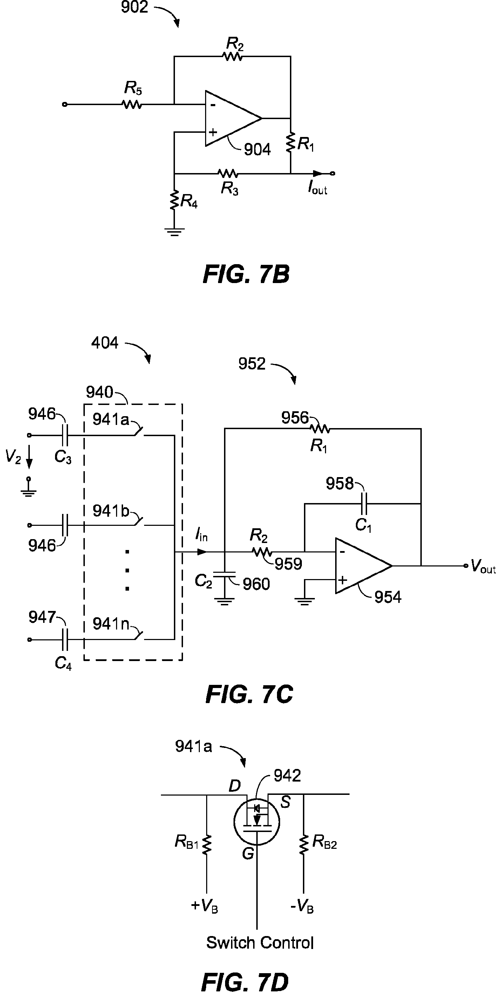

In some implementations, at least the inductor 704 may be of a type with a low temperature coefficient providing higher thermal stability reducing thermal drift of the impedance $Z_{11}$ as measured at each of the plurality of the capacitive sense circuits 108. In other implementations, the inductor 704 is a temperature compensation inductor configured to compensate at least a portion of a temperature drift of the capacitive sense element 109n. In further implementations (not shown herein), a supplementary temperature compensation capacitor is electrically connected in parallel to the capacitive sense element 109n (e.g., as illustrated by capacitor 715 in FIG. 7B) configured to compensate at least a portion of the total temperature drift of the inductor 704 and the capacitive sense element 109n. Further, the inductor 724 may uses a ferrite core or is an air coil providing higher linearity.

In another aspect and in some implementations of the circuit 900 built on a printed circuit board, the plurality of inductors 724 is arranged to reduce a magnetic field coupling between neighboring inductors 724 and a neighboring inductor 506 of an inductive sense circuit (e.g., inductive sense circuit 106a), e.g., by an alternating orientation. In yet other implementations, at least one of the inductor 724 and the transformer 726 is electromagnetically shielded to reduce at least one of a magnetic field coupling between neighboring inductors 724, 506, and a disturbance voltage induced e.g., by the magnetic field as generated by the wireless power transfer structure (e.g., wireless power transfer structure 200 with reference to FIGs 2 and 3).

In further implementations, at least a portion of the required inductance $L_s$ is realized by a leakage inductance of the transformer 726.

AThe secondary-referred main inductance $L_m$ of the transformer 726 together with capacitance $C$ of the capacitive sense element 109n form a $2^{nd}$ order high pass filter to attenuate a low frequency disturbance component in the voltage $V_2$ as previously discussed with reference to FIG. 6, and the inductive sense circuits 106 of FIG. 7A. The transformer 726 may be configured to attenuate this low frequency disturbance component to a level e.g., significantly below the level of the voltage $V_2$ in response to the respective current $I_1$ at the sense frequency. At the sense frequency, this high pass filter may exert a minor impact on the voltage $V_2$ and thus on the measurement of the impedance $Z_{11}$ and which may be corrected in a further processing (e.g., in the signal processing circuit 408 of FIG. 4). Any phase shift caused by this high pass filter may be determined e.g., by performing a calibration as previously discussed with reference to FIG. 6.

In a further aspect, the transformer 726 may be employed to transform the impedance $Z_{11}$ of the sense circuit 108n as presented at the series resonance into the suitable measuring range of the measurement circuit (e.g., measurement circuit 104 of FIG. 4) by adjusting the transformation ratio 1:$n_{VT}$ accordingly.

The driver circuit 402 includes a driver amplifier circuit 902, an input multiplexer circuit 910 illustrated in FIG. 7A as a plurality of switches 911a, 911b, ..., 911n, and a plurality of series resistors 914 and 915. The series resistors 914 connected to the inductive sense circuits 106 have a resistance $R_{ser1}$, while the series resistors 915 connected to the capacitive sense circuits have a resistance $R_{ser3}$ that generally differs from $R_{ser1}$. Each of the outputs of the input multiplexer circuit 910 connects to the respective sense circuit of the plurality of sense circuits 106 and 108 via the respective series resistors 914 and 915. The driver circuit 402 is configured to operate as a current source (e.g., current source 512 as described in connection with FIG. 5) and to selectively (e.g., sequentially) apply a drive current signal $I_1$ at the sense frequency to each of the plurality of inductive sense circuits 106 and to each of the plurality of the capacitive sense circuits 108. The drive current signal $I_1$ (e.g., a sinusoidal signal) is based on a driver input signal which may be an output of the signal generator circuit 406 with reference to FIG. 4. The driver amplifier circuit 902 as illustrated in FIG. 7A by example includes an amplifier 904 and external resistance circuitry comprising a first (feedback) resistor 906 and a second resistor 908 for adjusting a gain. In some implementations, the amplifier is at least one of a low noise operational amplifier and an operational amplifier providing high linearity. The driver amplifier circuit 902 is configured to receive the driver input signal and to provide a corresponding output with an accurate and stable voltage (a voltage source output). As previously mentioned, in some implementations, a DC voltage may be present at any of the plurality of outputs of the driver circuit 402 caused e.g., by a DC offset in the amplifier's 904 output voltage or by certain types of analog switches (e.g., switch 911a) of the input multiplexer circuit 910.

The driver amplifier circuit 902 together with series resistors (e.g., series resistor 914) mimic a current source characteristic at each of the plurality of outputs of the driver circuit 402. It may be appreciated that the series resistor (e.g., series resistor 914) with a resistance (e.g., $R_{ser1}$) substantially larger (e.g., 10 times larger) than the impedance magnitude $|Z_{11}|$ at series resonance e.g., of the sense circuit 106 may transform the voltage source output of the driver amplifier circuit 902 into a current source output meeting the requirements of a current source 512 as previously defined in connection with FIG. 5. Increasing the series resistance (e.g., $R_{ser1}$) may improve the current source characteristic but results in a lower level of drive current $I_0$. The drive current level may impact a SNR as previously defined with reference to FIG. 5F. Therefore, in some implementations, the series resistances $R_{ser1}$ and $R_{ser3}$ may represent a trade-off between a current source characteristic and a SNR.

In an alternative configuration, the current source characteristic is realized using a resistor (e.g., series resistor 914) with a lower resistance (e.g., $R_{ser1}$) instead using the DC block capacitor (e.g., capacitor 928) with a higher reactance, together providing an impedance substantially larger (e.g., 10 times larger) than the impedance as presented at the primary port of the transformer 726 at series resonance. In another implementation variant (not shown herein), the resistor (e.g., series resistor 914) is omitted entirely and the high impedance is realized by the DC block capacitor (e.g., capacitor 928). In a further implementation variant (not shown herein), the high series impedance as required to mimic a current source characteristic is realized at least in part by using at least one of an inductor (not shown in FIG. 7A) and a leakage inductance of a transformer.

In yet another implementation variant, the current source characteristic is realized using a driver amplifier circuit 902 configured as a regulated current source. An example current source circuit using an operational amplifier is illustrated in FIG. 7B. However, the current source characteristic as apparent at each of the plurality of outputs of the of the driver circuit 402 may be significantly impaired by the parasitic capacitances of the switch (e.g., switch 911a) as previously described. Therefore, this implementation variant (not shown herein), may incorporate the input multiplexer circuit 910 into the driver amplifier circuit 902 also employing an additional (third) multiplexer circuit in a feedback path. This implementation variant may provide a regulated (stable) current source characteristic at each of the plurality of outputs of the driver circuit 402 substantially eliminating the effect of the switch' parasitic capacitances.

In another implementation variant (not shown herein), the driver amplifier circuit 902 additionally includes an output transformer e.g., for purposes of transforming an output voltage. As opposed to lowering the resistance (e.g., $R_{ser1}$), the use of an output transformer may allow the drive current level $I_1$ and thus the sense element current levels $I_L$ and $I_C$ to be increased without compromising the current source characteristic of the driver circuit 402

The input multiplexer circuit 910 includes a plurality of switches 911a, 911b, ..., 911n and is configured to selectively connect each of the plurality of inductive sense circuits 106 and each of the plurality of capacitive sense circuits 108 via the respective series resistor 914 and 915 to the driver circuit 402 to selectively (e.g., sequentially) drive each of the plurality of inductive sense circuits 106 and each of the plurality of capacitive sense circuits 108 with the current $I_1$ at the sense frequency. Therefore, each of the plurality of switches 911a, 911b, ..., 911n is electrically connected to the driver amplifier circuit's 902 output that is also referred to as the common input node. The input multiplexer circuit 910 is further configured to receive an input MUX control signal from a control circuit (e.g., from the control and evaluation circuit 102 of FIG. 4) that controls the input multiplexer circuit 910.

Each of the plurality of switches 911a, 911b, ..., 911n may be one of a semiconductor analog switch (e.g., a single field effect transistor (FET) switch, a complementary FET switch composed of a p-channel and a n-channel type FET), a micro-mechanical systems (MEMS) switch or any other type of switch providing a sufficiently low series resistance, when the switch is closed (closed-state) and a sufficiently high current signal attenuation, when the switch is open (open-state). An example implementation of an analog switch (e.g., switch 911a) based on a single FET is illustrated in FIG. 7D.

The switches (e.g., switch 911a) may be characterized by a closed-state series resistance, an equivalent open-state series capacitance, and an equivalent parallel capacitance at each side of the switch. It may be appreciated that the closed-state resistance of the switch (e.g., switch 911a) is non-critical as it merges with the resistance (e.g., $R_{ser1}$) of the series resistor (e.g., series resistor 914). It may also be appreciated that the total capacitive load produced by the plurality of parallel capacitances at the common input node may be non-critical since it is in parallel to the voltage source output of the driver amplifier circuit 902.

The switch (e.g., switch 911a) of an example input multiplexer circuit 910 may use complementary FET switches with a closed-state resistance of 5 $\Omega$, an equivalent open-state series capacitance of 3 pF (corresponding to a series reactance of 17.7 k$\Omega$ at a sense frequency of 3 MHz), and an equivalent parallel capacitance of 12 pF on each side of the switch.

In a further aspect, the closed-state resistance of a semiconductor analog switch (e.g., switch 911a) may be subject of a temperature drift that may impact the temperature stability of the driver circuit 402. Therefore, in some implementations, the impact of the input multiplexer circuit 910 switch (e.g., switch 911a) is reduced by using a resistor (e.g., series resistor 914) whose resistance (e.g., $R_{ser1}$) is substantially larger than the closed-state resistance of the switch. Therefore, in some implementations, the series resistances $R_{ser1}$ and $R_{ser3}$ may also represent a trade-off between a temperature stability and a SNR as discussed above.

In an implementation variant of the circuit 900 (not shown herein), the order of the series resistor (e.g., series resistor 914) and the switch (e.g., switch 911a) is reversed, meaning that the plurality of series resistors 914 and 915 are electrically connected to the output of the driver amplifier circuit 902 (common input node) and the input multiplexer circuit 910 is inserted between the plurality of series resistors 914 and 915 and the plurality of sense circuits 106 and 108. Reversing the order may be advantageous for the design of the switch (e.g., switch 911a) as the voltage $V_2$ across the sense circuit may be substantially lower than the voltage at the output of the driver amplifier circuit 902.

As discussed above, a low frequency disturbance voltage (e.g., at WPT frequency) may be present at the driver circuit 402 output and at the measurement amplifier circuit 404 input e.g., due to the voltage induced into the sense element (e.g., sense element 107a) by the WPT magnetic field. If a switch (e.g., switch 911b) is in open-state, a substantial low frequency voltage may also be present across the switch. This may be particularly true during active WPT operation. If too large, the open-switch voltage may affect any of the switch' open-state electrical characteristic or cause damage to the switch. In some implementations, the open-switch voltage is limited by configuring the inductive and capacitive sense circuits (e.g., sense circuit 106a and sense circuit 108) accordingly, trading-off the open-switch voltage vs. other impacts.

The measurement amplifier circuit 404 is configured to operate as the analog front-end part of a voltage measurement circuit (e.g., voltage measurement circuit 510 as described in connection with FIG. 5). It is configured to selectively (e.g., sequentially) buffer and amplify the voltage $V_2$ in each of the plurality of inductive sense circuits 106 and in each of the plurality of capacitive sense circuits 108 and to provide a measurement amplifier output voltage signal $V_{out}$ (as indicated in FIG. 7A) based on the respective voltage $V_2$ at a level suitable for further processing e.g., in the signal processing circuit 408 with reference to FIG. 4. In some implementations providing a voltage gain, the voltage $V_{out}$ is larger than $V_2$. In other implementations, the measurement amplifier circuit 404 mainly serves for impedance buffering and is configured for unity gain. In further implementations, the output voltage $V_{out}$ is even smaller than $V_2$. As previously mentioned, a DC flow at any of the plurality of inputs of the measurement amplifier circuit 404 may be present e.g., caused by a DC offset at the amplifier's 954 input or by certain types of analog switches (e.g., switch 941a).

The measurement amplifier circuit 404 includes a transimpedance amplifier circuit 952, an output multiplexer circuit 940 illustrated in FIG. 7A as a plurality of switches 941a, 941b, ..., 941n, and a plurality of resistors 944 and 945 (series resistors) connected in series to the respective output of the output multiplexer circuit 940. The series resistors 944 connected to the inductive sense circuits 106 have a resistance $R_{ser2}$ that may differ from the series resistance $R_{ser1}$, while the series resistors 945 connected to the capacitive sense circuits 108 have a resistance $R_{ser4}$ that may differ from $R_{ser3}$ and $R_{ser2}$. Further, it includes. The plurality of switches 941a, 941b, ..., 941n are electrically connected to the transimpedance amplifier circuit's 952 input that is also referred to herein as the common output node of the output multiplexer circuit 940.

The example transimpedance amplifier circuit 952 as illustrated in FIG. 7A includes an amplifier 954, a feedback resistor 956 having a resistance $R_f$, and a feedback capacitor 958 having a capacitance $C_f$. In some implementations, the amplifier 954 is at least one of a low noise operational amplifier and an amplifier providing high linearity. The positive input (+) of the amplifier 954 connects to ground. Both the feedback resistor 956 and the feedback capacitor 958 are electrically connected between the output ($V_{out}$) and the negative input (-) of the amplifier 954. Further, the transimpedance amplifier circuit 952 is configured to receive an input current $I_{in}$, which is the output current at the common output node of the output multiplexer circuit 940 and to convert the input current $I_{in}$ into a proportional output voltage $V_{out}$. The conversion gain (transimpedance) is determined by the impedance of the parallel connection of the feedback resistor 956 and the feedback capacitor 958. Since the voltage at the negative input (-) of the amplifier 954 is virtually zero (virtual ground), the transimpedance amplifier circuit 952 presents a virtually zero input impedance at its negative input (-).

The transimpedance amplifier circuit 952 together with the series resistor (e.g., resistor 944) mimic a voltage measurement circuit characteristic at each of the plurality of inputs of the measurement amplifier circuit 404. It may be appreciated that the series resistor (e.g., resistor 944) with a resistance (e.g., $R_{ser2}$) substantially larger (e.g., 10 times larger) than the impedance magnitude $|Z_{11}|$ at series resonance e.g., of the sense circuit 106a transforms the virtually zero impedance input of the transimpedance amplifier circuit 952 into a high impedance input satisfying the requirements of a voltage measurement circuit 510 as previously specified in connection with FIG. 5. They form together a sign inverting voltage amplifier with an output voltage $V_{out}$ proportional to the sign inverse of the voltage $V_2$.

In an aspect, increasing the resistance (e.g., $R_{ser2}$) of the series resistor (e.g., resistor 944) may improve a voltage measurement circuit characteristic but reduce the input current level $I_{in}$. The input current level $I_{in}$ may impact a SNR. Moreover, increasing the resistance (e.g., $R_{ser2}$) may reduce an impact of the output multiplexer circuit 940 switch (e.g., switch 941a) (e.g., a temperature drift) as discussed above in connection with the input multiplexer circuit 910. Therefore, in some implementations, the resistances $R_{ser2}$ and $R_{ser4}$ may represent a trade-off between a voltage measurement circuit characteristic, a temperature stability, and a SNR.

In an example implementation variant (not shown herein), an impact of the output multiplexer circuit 940 switch (e.g., switch 941a) (e.g., a temperature drift) is reduced by omitting the output multiplexer circuit 940, instead using a plurality (bank) of measurement amplifiers (not shown herein), whose inputs are electrically connected to the respective measurement port (e.g., measurement port 937) of the respective sense circuit (e.g., sense circuit 106a) and whose outputs are electrically connected to a common output ($V_{out}$). Each measurement amplifier circuit 404 is configured to provide a high input impedance and includes an operational amplifier (e.g., amplifier 954) providing a mute control input to apply a logic signal indicative for the output MUX control signal as indicted in FIG. 7A. The operational amplifier is further configured to provide a virtually zero gain and a high output impedance when muted. An example circuit using a bank of operational amplifiers is disclosed in U.S. Patent No. 11,046,193, titled *Foreign Object Detection Circuit Using Current Measurement*.

In an example configuration of the circuit 900, the voltage measurement circuit characteristic is realized using a resistor (e.g., resistor 944) with a lower resistance (e.g., $R_{ser2}$) instead using the DC block capacitor (e.g., capacitor 929 of sense circuit 106a) with a higher reactance, together providing a series impedance substantially larger (e.g., 10 times larger) than the impedance of the series circuit e.g., of the sense element 107a and the capacitor 504 at series resonance. In an implementation variant, the series resistor (e.g., resistor 944) is omitted and the voltage measurement circuit characteristic is realized using the DC block capacitor (e.g., capacitor 929) configured to provide a high enough series impedance. In another implementation variant (not shown herein), the high series impedance as required to mimic a current source characteristic is realized at least in part by using at least one of an inductor (not shown in FIG. 7A) and a leakage inductance of a transformer.

The feedback capacitor 958 provides the transimpedance amplifier circuit 952 with a first order low pass filter characteristic to attenuate disturbance signal components at frequencies higher than the sense frequency (e.g., high order WPT harmonics). In some implementations, the capacitance $C_f$ may be a trade-off between a reduction in gain at the sense frequency and an attenuation of the high frequency signal components. The feedback capacitor 958 may reduce a risk for signal clipping or non-linear distortion in the amplifier 954 or in the further processing (e.g., the signal processing circuit 408 with reference to FIG. 4) e.g., during WPT operation. In other words, it may reduce the dynamic range requirements for the measurement amplifier circuit 404 and in the further processing.

In an implementation variant (not shown herein), the transimpedance amplifier circuit 952 is further enhanced by a supplementary feedback inductor electrically connected in parallel to the feedback capacitor 958 providing the transimpedance amplifier circuit 952 with a bandpass characteristic tuned to the sense frequency. This inductor may help to further suppress low frequency disturbance signal components (e.g., the WPT fundamental and low frequency harmonics thereof). In such an implementation, the feedback capacitor 958 may be a temperature compensation capacitor to compensate for at least a portion of the feedback inductor's temperature drift.

In another implementation variant (not shown in FIG. 7A), the measurement amplifier circuit 404 is configured as an active filter providing a bandpass characteristic similar to the implementation variant described above using a parallel feedback inductor. This circuit may not use any inductors. An example implementation of a measurement amplifier circuit 404 using an active filter is illustrated in FIG. 7C.

The output multiplexer circuit 940 including the plurality of switches 941a, 941b, ..., 941n is configured to selectively connect each of the plurality of inductive sense circuits 106 and each of the plurality of capacitive sense circuits 108 via the respective series resistors 944 and 945 to the transimpedance amplifier circuit 952 to selectively (e.g., sequentially) buffer and amplify the voltage $V_2$ at each of the plurality of sense circuits 106 and 108 in response to a current $I_0$ at the sense frequency. Therefore, each of the plurality of switches 941a, 941b, ..., 941n is electrically connected to the common output node that is electrically connected to the negative input of the transimpedance amplifier circuit 952. The output multiplexer circuit 940 is further configured to receive an output MUX control signal from a control circuit (e.g., from the control and evaluation circuit 102 of FIG. 4) that controls the output multiplexer circuit 940.

As for the input multiplexer circuit 910, each of the plurality of switches 941a, 941b, ..., 1041n may be one of a semiconductor analog switch (e.g., a single FET switch, a complementary FET switch composed of a p-channel and a n-channel type FET), a micro-mechanical systems (MEMS) switch or any other type of switch providing a sufficiently high current signal attenuation in the open-state. An example implementation of an analog switch (e.g., switch 941a) based on a single FET is illustrated in FIG. 7D.

As previously discussed in connection with the input multiplexer circuit 910, each of the plurality of switches 941a, 941b, ..., 941n may exhibit a closed-state series resistance, an equivalent open-state series capacitance, and an equivalent parallel capacitance on each side of the switch. It may be appreciated that the closed-state series resistance (e.g., of switch 941a) may be non-critical for the functioning of the measurement amplifier circuit 404 since it merges into an overall series resistance $R_{ser2}$ or $R_{ser4}$. It may also be appreciated that the total capacitive load produced by the plurality of parallel capacitances at the common output node of the output multiplexer circuit 940 may be non-critical since it is in parallel to the virtually zero-impedance input of the transimpedance amplifier circuit 952.

An example output multiplexer circuit 940 for a sense frequency of 3 MHz may use complementary FET switches with the same characteristics as those used for the example input multiplexer circuit 910 as specified above.

As previously discussed with reference to the input multiplexer circuit 910, a low frequency voltage (e.g., at WPT frequency) may also be present across the switch (e.g., switch 941a) when WPT is active and the switch in open-state. If too large, this open-switch voltage may affect any of the switch's open-state electrical characteristics or cause damage to the switch. In some implementations, the open-switch voltage is limited as previously discussed for the input multiplexer circuit 910.

In an implementation variant (not shown herein), the order of the series resistor (e.g., resistor 944) and the switch (e.g., switch 941a) is reversed, meaning that the series resistor (e.g., resistor 944) is electrically connected to the input of the transimpedance amplifier circuit 952 (common output node) and the output multiplexer circuit 940 is inserted between the plurality of sense circuits 106 and 108 and the plurality of resistors 944 and 945.

A further implementation variant of the circuit 900 (not shown herein) omits the output multiplexer circuit 940 e.g., for reasons of complexity and cost reduction. In theory, the input multiplexer circuit 910 may be enough to selectively (e.g., sequentially) drive a sense circuit (e.g., sense circuit 106a) with the current $I_1$ and to selectively measure the voltage $V_2$ at its measurement port 937 in response to the current $I_1$. Because the measurement amplifier circuit 404 is configured as a voltage summation amplifier, its output voltage $V_{out}$ is indicative of the sum of the voltages at each of the plurality of measurement ports 937. Since the voltages $V_2$ at the inactive sense circuits (not driven by the current $I_1$) are ideally zero, the output voltage $V_{out}$ is indicative of the voltage $V_2$ of the active sense circuit (e.g., sense circuit 106a) driven by the current $I_1$. However, in practice, disturbance voltages e.g., inductively or capacitively coupled into the sense element (e.g., inductive sense element 107b) may also sum up resulting in a lower SNR as compared to a circuit 900 using the output multiplexer circuit 940. Moreover, a circuit 900 omitting the output multiplexer circuit 940 may not support supplementary inter-sense circuit transimpedance $Z_{12}$ measurements as described above. The inter-sense circuit transimpedance $Z_{12}$ between the measurement port 936 of sense circuit 106a and the measurement port 937 of sense circuit 106b may be measured by setting the switches 911a and 941b to the close-state and the other switches of the plurality of switches 911a, 911b, ..., 911n to the open-state.

FIG. 7C is a circuit diagram illustrating an example implementation of a measurement amplifier circuit 404 using an active filter providing a bandpass characteristic as previously mentioned with reference to FIG. 7A. The measurement amplifier circuit 404 is configured to selectively (e.g., sequentially) buffer and amplify the voltage $V_2$ in each of the plurality of inductive sense circuits 106 and in each of the plurality of capacitive sense circuits 108 and to provide an output voltage $V_{out}$ based on the respective voltage $V_2$ at a level suitable for further processing e.g., in the signal processing circuit 408 with reference to FIG. 4. In some implementations, the bandpass filter characteristic of the active filter substantially equals the bandpass pass characteristics of the measurement amplifier circuit 404 based on a transimpedance amplifier circuit 952 including a feedback network comprising a resistor, a capacitor, and an inductor as previously described in connection with FIG. 7A. However, the temperature stability of the measurement amplifier circuit 404 of FIG. 7C using an active filter may be higher than that of a measurement amplifier circuit 404 using a feedback inductor.

The example measurement amplifier circuit 404 of FIG. 7C includes a transimpedance amplifier circuit 952, an output multiplexer circuit 940 including a plurality of switches 941a, 941b, ..., 941n, and a plurality of capacitors (series capacitors 946 and 947) connected in series to the respective switch. In the measurement amplifier circuit 404 of FIG. 7C, the resistors 944 and 945 with reference to FIG. 7A are supplanted by respective series capacitors 946 and 947 having capacitance $C_3$ and $C_4$ configured to provide the high input impedance and the active filter characteristic as required in some implementations of the measurement amplifier circuit 404. The transimpedance amplifier circuit includes an amplifier 954 (e.g., at least one of a low noise operational amplifier and an operational amplifier providing high linearity). The amplifier's 954 positive input (+) is electrically connected to ground. A feedback capacitor 958 with capacitance $C_1$ is electrically connected between the output ($V_{out}$) and the negative input (-) of the amplifier 954. Further, a feedback resistor 956 with resistance $R_1$ is electrically connected between the output ($V_{out}$) and the input ($I_{in}$) of the transimpedance amplifier circuit 952. A resistor 959 with resistance $R_2$ is electrically connected between the input ($I_{in}$) of the transimpedance amplifier circuit 952 and the negative input (-) of the amplifier 954. A capacitor 960 with capacitance $C_2$ is electrically connected between the input ($I_{in}$) of the transimpedance amplifier circuit 952 and ground. Further, each of the capacitors 946 having a capacitance $C_3$ capacitively couples a respective switch (e.g., switch 941a) to the respective inductive sense circuit (e.g., inductive sense circuit 106a), while each of the capacitors 947 having a capacitance $C_4$ capacitively couples a respective switch (e.g., switch 941n) to the respective capacitive sense circuit (e.g., capacitive sense circuit 108a). The second terminal of the plurality of switches 941a, 941b, ..., 941n is connected to the common output node corresponding to the input ($I_{in}$) of the transimpedance amplifier circuit 952.

Active filters providing a bandpass characteristic may be implemented in a number of ways which may be well known to those skilled in the art. However, not many of these implementations may satisfy the requirements of a voltage measurement circuit (e.g., voltage measurement circuit 510).

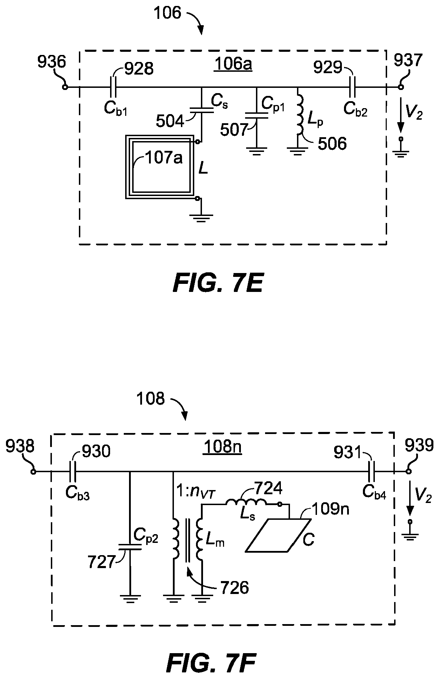

FIG. 7D is a circuit diagram illustrating an example implementation of an analog switch (e.g., 941a) as used in an example implementation of the output multiplexer circuit 940. The analog switch uses a single field-effect transistor (FET) 942 (e.g., a n-channel metal-oxide-semiconductor field-effect transistor (MOSFET)). The analog switch is controlled by a switch control signal applied to the gate (G) of the FET 942. The Drain (D) of the FET 942 is DC biased with a positive voltage $+V_B$ via a resistor having a resistance $R_{B1}$ (e.g., in the k$\Omega$ range). The positive DC voltage $+V_B$ ensures that the voltage across the FET channel remains positive at any time when in open-state and in presence of a superimposed alternating voltage across the FET channel (e.g., during WPT operation as previously discussed with reference to FIG. 7). Further, a negative DC voltage $-V_B$ is applied at the Source (S) of the FET 942. This voltage may be adjusted to substantially compensate for any DC at the input of the transimpedance amplifier circuit 952 caused by the positive DC voltage $+V_B$ and to reduce a DC offset at the output ($V_{out}$).

FIG. 7E is a circuit diagram illustrating an alternative example implementation of the inductive sense circuit 106a of the plurality of inductive sense circuits 106 of the circuit 900 of FIG. 7A. This alternative exaDmple implementation illustrated in FIG. 7E additionally includes a parallel capacitor 507 having a capacitance $C_{p1}$ and applies to any of the plurality of inductive sense circuits 106. In some implementations, the parallel inductor 506 and the parallel capacitor 507 are configured to provide a parallel resonance substantially at the nominal sense frequency.

In an aspect, the sense element 107a having inductance $L$ in combination with the parallel capacitor 507 having capacitance $C_{p1}$ form a 2nd order low pass filter to attenuate a disturbance component in the voltage $V_2$ at a frequency substantially higher than the nominal sense frequency. In some implementations or operations, this disturbance component emanates from a voltage inductively or capacitively coupled into the sense element 107a by the magnetic or electric field, respectively, as generated during wireless power transfer. In other implementations or operations, it emanates from a voltage inductively or capacitively coupled into the sense element 107a by the magnetic or electric field, respectively, as generated by another system (not shown herein) e.g., a transmitter of a communication system operating at a frequency substantially higher than the nominal sense frequency and that is cointegrated into the primary wireless power transfer structure 200 with reference to FIG. 2.

FIG. 7F is a circuit diagram illustrating an alternative example implementation of the capacitive sense circuit 108n of the plurality of capacitive sense circuits 108 of the circuit 900 of FIG. 7A. This alternative example implementation additionally includes a parallel capacitor 727 having a capacitance $C_{p2}$ and applies to any of the plurality of capacitive sense circuits 108. In some implementations, the transformer 726 having the secondary-referred main inductance $L_m$ (with reference to the equivalent circuit of FIG. 5H) and the parallel capacitor 507 having capacitance $C_{p2}$ are configured to provide a parallel resonance substantially at the nominal sense frequency.

In an aspect, the series inductor 724 having inductance $L_s$ in combination with the parallel capacitor 727 having capacitance $C_{p2}$ form a 2nd order low pass filter to attenuate a disturbance component in the voltage $V_2$ at a frequency substantially higher than the nominal sense frequency. In some implementations or operations, this disturbance component emanates from a voltage coupled into the sense electrode (e.g., capacitive sense element 109n) e.g., by the electric field as generated during wireless power transfer. In other implementations or operations, it emanates from a voltage coupled into the sense electrode (e.g., capacitive sense element 109n) e.g., by the electric field as generated by another system (not shown herein) but an example is provided above.

In some implementations, each of the parallel capacitors 507 and 727 as part of a 2nd order low pass filter reduces dynamic range requirements of the measurement amplifier circuit 404 and may also protect the driver circuit 402 including the input multiplexer circuit 910 and the measurement amplifier circuit 404 including the output multiplexer circuit 940 from being overloaded. Stated more generally, it may reduce non-linear distortion effects (e.g., signal clipping) in the circuit 900 of FIG. 7A.

The various operations of methods described above may be performed by any suitable means capable of performing the corresponding functions. The means may include various hardware and/or software component(s) and/or module(s), including, but not limited to a circuit, an application-specific integrated circuit (ASIC), or processor. Generally, where there are operations illustrated in figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database, or another data structure), ascertaining, and the like. Also, "determining" may include receiving (e.g., receiving information), accessing (e.g., accessing data in a memory), and the like. Also, "determining" may include resolving, selecting, choosing, establishing, and the like.

As used herein, a phrase referring to "at least one of" a list of items refers to any combination of those items, including single members. As an example, "at least one of: a, b, or c" is intended to cover: a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

The various illustrative logical blocks, modules and circuits described in connection with the present disclosure may be implemented or performed with a general-purpose processor, a digital signal processor (DSP), an ASIC, a field programmable gate array (FPGA) or other programmable logic device (PLD), discrete gate or transistor logic, discrete hardware components, or any combination thereof designed to perform the functions described herein. A processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The bus may also link various other circuits such as timing sources, peripherals, voltage regulators, power management circuits, and the like.

It is to be understood that the claims are not limited to the precise configuration and components illustrated above. Various modifications, changes and variations may be made in the arrangement, operation and details of the methods and apparatus described above without departing from the scope of the claims.

**Claims**

1.  A detection circuit configured to detect an object in a wireless power transfer system, the detection circuit comprising:

    a sense element (107a, 107b);
    a reactance-compensating element (504) in series with the sense element to form a series circuit configured to provide a series resonance substantially at a nominal sense frequency of the detection circuit;
    a parallel inductor (506) in parallel with the series circuit and configured to attenuate a low frequency disturbance component in a voltage across the series circuit at a frequency substantially lower than the nominal sense frequency of the detection circuit; and

a parallel capacitor (928) in parallel with the series circuit and **characterized in that** the parallel capacitor is configured to:

provide parallel resonance together with the parallel inductor at the nominal sense frequency; and attenuate a high frequency disturbance component in the voltage across the series circuit at a frequency substantially higher than the nominal sense frequency of the detection circuit, the high frequency disturbance component generated by a communication system that is coupled to the wireless power transfer system and that runs at a frequency substantially higher than the nominal sense frequency;

wherein the sense element is an inductive sense element comprising at least one sense coil, and wherein the reactance-compensating element is a capacitor; or wherein the sense element is a capacitive sense element comprising at least one sense electrode, and wherein the reactance-compensating element is an inductor.

2. The detection circuit of claim 1, wherein the low frequency disturbance component in the voltage across the series circuit is generated by the wireless power transfer system when active.

3. The detection circuit of claim 1, wherein the detection circuit is operable to detect an object comprising a foreign metallic object located in a predetermined space of the wireless power transfer system.

4. The detection circuit of claim 1, wherein the detection circuit is operable to detect an object comprising a living object located in a predetermined space of the wireless power transfer system.

5. A wireless power transmission system comprising:

a primary wireless power transfer structure;
a communication system operating at a first frequency; and
a detection circuit for detecting an object, the detection circuit comprising:

a sense element;
a reactance-compensating element in series with the sense element to form a series circuit configured to provide a series resonance substantially at a nominal sense frequency of the detection circuit, the first frequency of the communication system being substantially higher than the nominal sense frequency of the detection circuit;
a parallel inductor in parallel with the series circuit and configured to attenuate a low frequency disturbance component in a voltage across the series circuit at a frequency substantially lower than the nominal sense frequency of the detection circuit; and
a parallel capacitor in parallel with the series circuit and **characterised in that** the parallel capacitor is configured to:
provide parallel resonance together with the parallel inductor at the nominal sense frequency; and
attenuate a high frequency disturbance component in the voltage across the series circuit at a frequency substantially higher than the nominal sense frequency of the detection circuit, the high frequency disturbance component generated by the communication system at the first frequency; wherein the sense element is an inductive sense element comprising at least one sense coil, and wherein the reactance-compensating element is a capacitor; or

wherein the sense element is a capacitive sense element comprising at least one sense electrode, and wherein the reactance-compensating element is an inductor.

6. The wireless power transmission system of claim 5, wherein the low frequency disturbance component in the voltage across the series circuit is generated by the wireless power transmission system when active.

**Patentansprüche**

1. Eine Detektionsschaltung, die so konfiguriert ist, dass sie ein Objekt in einem drahtlosen Energieübertragungssystem detektiert, wobei die Detektionsschaltung Folgendes aufweist:

ein Erfassungselement (107a, 107b);

ein reaktanzkompensierendes Element (504) in Reihe mit dem Erfassungselement, um eine Reihenschaltung zu bilden, die so konfiguriert ist, dass sie eine Reihenresonanz im Wesentlichen bei einer Nennerfassungsfrequenz der Detektionsschaltung bereitstellt;

eine Parallelinduktivität (506), die parallel zu der Reihenschaltung geschaltet und so konfiguriert ist, dass sie eine niederfrequente Störkomponente in einer Spannung über der Reihenschaltung bei einer Frequenz dämpft, die wesentlich niedriger ist als die Nennerfassungsfrequenz der Detektionsschaltung; und

einen Parallelkondensator (928) und zwar parallel zu der Reihenschaltung und **dadurch gekennzeichnet, dass** der Parallelkondensator konfiguriert ist, um:

eine Parallelresonanz zusammen mit der Parallelinduktivität bei der nominalen Erfassungsfrequenz bereitzustellen; und

eine hochfrequente Störkomponente in der Spannung über der Reihenschaltung bei einer Frequenz zu dämpfen, die wesentlich höher ist als die nominale Erfassungsfrequenz der Detektionsschaltung, wobei die hochfrequente Störkomponente von einem Kommunikationssystem erzeugt wird, das mit dem drahtlosen Energieübertragungssystem gekoppelt ist und das mit einer Frequenz läuft, die wesentlich höher ist als die nominale Erfassungsfrequenz;

wobei das Erfassungselement ein induktives Erfassungselement ist, das mindestens eine Erfassungsspule aufweist, und wobei das reaktanzkompensierende Element ein Kondensator ist; oder wobei das Erfassungselement ein kapazitives Erfassungselement ist, das mindestens eine Erfassungselektrode aufweist, und wobei das reaktanzkompensierende Element eine Spule ist.

2. Die Detektionsschaltung nach Anspruch 1, wobei die niederfrequente Störkomponente in der Spannung an der Reihenschaltung durch das drahtlose Energieübertragungssystem erzeugt wird, wenn es aktiv ist.

3. Die Detektionsschaltung nach Anspruch 1, wobei die Detektionsschaltung in der Lage ist, ein Objekt zu detektieren, das einen metallischen Fremdkörper aufweist, der sich in einem vorbestimmten Raum des drahtlosen Energieübertragungssystems befindet.

4. Die Detektionsschaltung nach Anspruch 1, wobei die Detektionsschaltung in der Lage ist, ein Objekt zu detektieren, das ein lebendes Objekt aufweist, das sich in einem vorbestimmten Raum des drahtlosen Energieübertragungssystems befindet.

5. Ein drahtloses Energieübertragungssystem mit: einer primären drahtlosen Energieübertragungsstruktur;

ein Kommunikationssystem, das mit einer ersten Frequenz arbeitet; und

eine Detektionsschaltung zum Detektieren eines Objekts, wobei die Detektionsschaltung aufweist:

ein Erfassungselement;

ein reaktanzkompensierendes Element in Reihe mit dem Erfassungselement, um eine Reihenschaltung zu bilden, die so konfiguriert ist, dass sie eine Reihenresonanz im Wesentlichen bei einer Nennerfassungsfrequenz der Detektionsschaltung bereitstellt, wobei die erste Frequenz des Kommunikationssystems wesentlich höher ist als die Nennerfassungsfrequenz der Detektionsschaltung;

eine Parallelinduktivität, die parallel zu der Reihenschaltung liegt und so konfiguriert ist, dass sie eine niederfrequente Störkomponente in einer Spannung über der Reihenschaltung bei einer Frequenz dämpft, die wesentlich niedriger ist als die Nennerfassungsfrequenz der Detektionsschaltung; und

einen Parallelkondensator parallel zu der Reihenschaltung und **dadurch gekennzeichnet, dass** der Parallelkondensator so konfiguriert ist, zum:

Bereitstellen einer Parallelresonanz zusammen mit der Parallelspule bei der Nennerfassungsfrequenz; und

Dämpfen einer hochfrequenten Störungskomponente in der Spannung über der Reihenschaltung bei einer Frequenz, die wesentlich höher ist als die nominale Erfassungsfrequenz der Detektionsschaltung, wobei die hochfrequente Störungskomponente durch das Kommunikationssystem bei der ersten Frequenz erzeugt wird; wobei das Erfassungselement ein induktives Erfassungselement ist, das mindestens eine Erfassungsspule aufweist, und wobei das Reaktanzkompensationselement ein Kondensator ist; oder

wobei das Erfassungselement ein kapazitives Erfassungselement ist, das mindestens eine Sensorelektrode aufweist, und wobei das reaktanzkompensierende Element eine Drossel ist.

**6.** Das drahtlose Energieübertragungssystem nach Anspruch 5, wobei die niederfrequente Störkomponente in der Spannung an der Reihenschaltung durch das drahtlose Energieübertragungssystem im aktiven Zustand erzeugt wird.

**Revendications**

**1.** Un circuit de détection configuré pour détecter un objet dans un système de transfert d'énergie sans fil, le circuit de détection comprenant :

un élément de détection (107a, 107b) ;
un élément de compensation de réactance (504) en série avec l'élément de détection pour former un circuit en série configuré pour fournir une résonance en série sensiblement à une fréquence de détection nominale du circuit de détection ;
un inducteur parallèle (506) en parallèle avec le circuit série et configuré pour atténuer une composante de perturbation à basse fréquence dans une tension aux bornes du circuit série à une fréquence sensiblement inférieure à la fréquence de détection nominale du circuit de détection ; et
un condensateur parallèle (928) en parallèle avec le circuit série et **caractérisé en ce que** le condensateur parallèle est configuré pour :

fournir une résonance parallèle avec l'inducteur parallèle à la fréquence de détection nominale ; et
atténuer une composante de perturbation à haute fréquence dans la tension aux bornes du circuit série à une fréquence sensiblement supérieure à la fréquence de détection nominale du circuit de détection, la composante de perturbation à haute fréquence étant générée par un système de communication qui est couplé au système de transfert d'énergie sans fil et qui fonctionne à une fréquence sensiblement supérieure à la fréquence de détection nominale ;

dans lequel l'élément de détection est un élément de détection inductif comprenant au moins une bobine de détection, et dans lequel l'élément de compensation de réactance est un condensateur ; ou dans lequel l'élément de détection est un élément de détection capacitif comprenant au moins une électrode de détection, et dans lequel l'élément de compensation de réactance est un inducteur.

**2.** Circuit de détection selon la revendication 1, dans lequel la composante de perturbation à basse fréquence dans la tension à travers le circuit en série est générée par le système de transfert d'énergie sans fil lorsqu'il est actif.

**3.** Circuit de détection selon la revendication 1, dans lequel le circuit de détection est utilisable pour détecter un objet comprenant un objet métallique étranger situé dans un espace prédéterminé du système de transfert d'énergie sans fil.

**4.** Le circuit de détection de la revendication 1, dans lequel le circuit de détection est utilisable pour détecter un objet comprenant un objet vivant situé dans un espace prédéterminé du système de transfert d'énergie sans fil.

**5.** Système de transmission d'énergie sans fil comprenant :

une structure de transfert d'énergie sans fil primaire ;
un système de communication fonctionnant à une première fréquence ; et
un circuit de détection pour détecter un objet, le circuit de détection comprenant :

un élément de détection ;
un élément de compensation de réactance en série avec l'élément de détection pour former un circuit en série configuré pour fournir une résonance en série sensiblement à une fréquence de détection nominale du circuit de détection, la première fréquence du système de communication étant sensiblement supérieure à la fréquence de détection nominale du circuit de détection ;
un inducteur parallèle en parallèle avec le circuit série et configuré pour atténuer une composante de perturbation à basse fréquence dans une tension à travers le circuit série à une fréquence sensiblement inférieure à la fréquence de détection nominale du circuit de détection ; et
un condensateur parallèle en parallèle avec le circuit série et **caractérisé en ce que** le condensateur parallèle est configuré pour :

fournir une résonance parallèle avec l'inducteur parallèle à la fréquence de détection nominale ; et atténuer une composante de perturbation à haute fréquence dans la tension aux bornes du circuit série à une fréquence sensiblement supérieure à la fréquence de détection nominale du circuit de détection, la composante de perturbation à haute fréquence générée par le système de communication à la première fréquence ; dans lequel l'élément de détection est un élément de détection inductif comprenant au moins une bobine de détection, et dans lequel l'élément de compensation de réactance est un condensateur ; ou

dans lequel l'élément de détection est un élément de détection capacitif comprenant au moins une électrode de détection, et
dans lequel l'élément de compensation de réactance est un inducteur.

6. Système de transmission d'énergie sans fil selon la revendication 5, dans lequel la composante de perturbation à basse fréquence dans la tension à travers le circuit en série est générée par le système de transmission d'énergie sans fil lorsqu'il est actif.

100

Multi-Purpose Detection Circuit

Control and Evaluation Circuit
102

Measurement Circuit
104

106

Plurality of Ind. Sense Circuits

106a    106b         106n

Sense Circuit | Sense Circuit | . . . | Sense Circuit

108

Plurality of Cap. Sense Circuits

108a    108b         108n

Sense Circuit | Sense Circuit | . . . | Sense Circuit

109

109a

109a

109b

109b

107

107a    107b

112

110

107n

109n

109n

114

*FIG. 1*

**FIG. 2**

FIG. 3

**FIG. 4**

**FIG. 5**

**FIG. 6**

Meas. Amp. Output Signal

Output MUX Control

Input MUX Control

Driver Input Signal

$V_{out}$

952

$C_f$ 958

$R_f$ 956

954

404 940

$I_{in}$

941a 941b 941n

$R_{ser2}$ 944  $R_{ser2}$  $R_{ser4}$ 945

937 $V_2$ 939 $V_2$

929 $C_{b2}$  $C_{b2}$  931 $C_{b4}$ 109n

506 $L_p$  $L_p$  724 $L_s$ $C$

$C_s$  $C_s$  $1:n_{VT}$

106a 504  106b  $L$ 726

107a  107b  $L_m$

106  108n

928 $C_{b1}$  $C_{b1}$  930 $C_{b3}$  108

936 $I_1$ 938 $I_1$

$R_{ser1}$ 914  $R_{ser1}$  $R_{ser3}$ 915

911a 911b 911n

402 910

904 906 908

902

900

**FIG. 7A**

**FIG. 7B**

**FIG. 7C**

**FIG. 7D**

106

936    928    106a    929    937

$C_{b1}$    $C_s$    $C_{p1}$    $L_p$    $C_{b2}$    $V_2$

504    507    506

107a    $L$

**FIG. 7E**

108

938    930    108n    931    939

$C_{b3}$    $1:n_{VT}$    724    $C_{b4}$    $V_2$

$L_s$    109n

$C_{p2}$    $L_m$    $C$

727    726

**FIG. 7F**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021124078 A1
- US 10627257 B
- US 9952266 B
- US 052445
- US 9726518 B
- US 358534
- US 10122192 B
- US 10124687 B

- US 9921045 B
- US 10295693 B
- US 10302795 B
- US 10298049 B
- US 11046193 B
- US 10855117 B
- US 11002874 B
- US 392464